# EUROPÄISCHE PATENTSCHRIFT

(11) **EP 3 264 905 B1**
(45) Veröffentlichungstag und Bekanntmachung des Hinweises auf die Patenterteilung: **08.05.2019**
(21) Anmeldenummer: 15708186.0
(22) Anmeldetag: 03.03.2015
(51) Int. Cl.: A22C 25/14

(54) **ENTWEIDE-EINRICHTUNG SOWIE VERFAHREN ZUM ENTWEIDEN VON FISCHEN**
EVISCERATING DEVICE AND METHOD FOR EVISCARATING FISH
DISPOSITIF D'ÉVISCÉRATION ET PROCÉDÉ POUR ÉVISCÉRER DES POISSONS

(43) Veröffentlichungstag der Anmeldung: 10.01.2018
(73) Patentinhaber: Nordischer Maschinenbau Rud. Baader GmbH + Co. KG, 23560 Lübeck (DE)
(72) Erfinder: PAULSOHN, Carsten, 23568 Lübeck (DE)
(74) Vertreter: Stork Bamberger Patentanwälte PartmbB
(86) Internationale Anmeldenummer: PCT/EP2015/054437
(87) Internationale Veröffentlichungsnummer: WO 2016/138945

(56) Entgegenhaltungen:
- WO-A1-2007/128386
- DE-A1- 3 343 789
- DE-A1- 19 829 376
- US-B1- 7 179 163

## Beschreibung

Die Erfindung betrifft eine Entweide-Einrichtung zum Entweiden von Fischen, umfassend einen Förderer zum Fördern der Fische längs einer Bearbeitungslinie in Rückenlage und Längsausrichtung, eine Fisch-Messeinrichtung zum Erfassen spezifischer Fischdaten, eine Bauchöffnungs-Einrichtung und oberhalb der Bearbeitungslinie angeordnete Bearbeitungsmittel zur Entnahme der Eingeweide, bestehend aus hintereinander angeordneten Entweidewerkzeugen, die in die geöffnete Bauchhöhle hinein und aus dieser heraus steuerbar sind, wobei jedes Entweidewerkzeug mittels einer zugehörigen, in ihrer Schwenkposition steuerbaren Werkzeug-Schwinge über zwei Schwingen-Schwenkachsen, die beide quer zu einer Vertikalebene und zur Förderrichtung liegen, aufgehängt ist, und eine rechnerbetriebene Einrichtungs- Steuereinrichtung, mittels der das Einsteuern, das Aussteuern und Bearbeitungswege der Entweidewerkzeuge in Abhängigkeit von der Fisch-Fördergeschwindigkeit, von den erfassten spezifischen Fischdaten und von Werkzeug-Kontakt mit zu bearbeitenden Fischteilen in der Bauchhöhle steuerbar sind. Die Erfindung bezieht sich auch auf ein Verfahren zum Entweiden von Fischen, die entlang einer Bearbeitungslinie in Rückenlage und Längsausrichtung gefördert werden, wobei mittels einer Fisch-Messeinrichtung spezifische Fischdaten erfasst werden, zunächst der Bauch geöffnet wird und anschließend mit mehreren längs der Bearbeitungslinie hintereinander angeordneten Entweidewerkzeugen die Bauchhöhle ausgeräumt und gereinigt wird, wobei Bewegungen der Entweidewerkzeuge in Abhängigkeit von Steuergrößen, nämlich von den gemessenen Fischdaten, von Bearbeitungskontakt mit Fischteilen in der Bauchhöhle und von der Fisch-Fördergeschwindigkeit gesteuert werden.

Aus DE 198 29 376 A1 sind eine Einrichtung und ein Verfahren zum Ausnehmen von Fischen, insbesondere Lachsen bekannt. Auf DE 198 29 376 A1 wird zur prinzipiellen Bauform und Funktion der gattungsgemäßen Entweide-Einrichtung Bezug genommen. Jeder auf dem Rücken liegende und Schwanz voraus geförderte Fisch wird während seines Transports nacheinander von mehreren Werkezeugen bearbeitet. Es sind drei Entweidewerkzeuge vorgesehen, deren Werkzeugköpfe durch Schaber, Kratzer oder Messer mit Saugdüsen gebildet sind.

Entweidewerkzeuge, wie sie aus DE 198 29 376 A1 bekannt sind, sind an stationären Stellen entlang eines Förderweges angeordnet und nur in der Höhenlage gegenüber dem Förderweg verstellbar. Eine bekannte Lagerung besteht darin, dass jedes der drei genannten Entweidewerkzeuge an einer schwenkbar am Einrichtungsgehäuse gelagerten Schwinge, gebildet durch einen schwenkbaren Hebel, angebracht ist. Die Länge der bekannten Schwinge ist so groß, dass das Entweidewerkzeug beim Schwenken um die Schwenkachse, an der die Schwinge stationär aufgehängt ist, im Wesentlichen vertikal bewegt wird. Jedes der drei genannten Entweidewerkzeuge verfügt über ein nur eingeschränktes Bewegungsfeld. Beim Bewegen des Entweidewerkzeugs in seinen Wirkbereich (Arbeitsbereich) wird eine Bewegung im Wesentlichen senkrecht zur Fisch-Förderrichtung vollzogen. Das Entweidewerkzeug bleibt dann in Bezug auf eine horizontale Bewegung in Förderrichtung weitgehend ortsfest, wobei der Mittelgräte des zu bearbeitenden Fisches durch Relativbewegung des Entweidewerkzeugs gegenüber dem geförderten Fisch gefolgt wird. Um das Entweidewerkzeug kollisionsfrei aus dem Fischkörper herauszuschwenken, wird das Entweidewerkzeug schwenkbar an die genannte Schwinge angelenkt, wobei zum Einnehmen einer Wirkposition in der Bauchhöhle und einer Warteposition oberhalb des Fisches nur zwei Schwenkpositionen ansteuerbar sind. Das zur Kollisionsvermeidung rechtzeitige Herausschwenken verkürzt die Verweildauer des Entweidewerkzeugs im Schlundbereich. Im Ganzen führt die Unbeweglichkeit oder eingeschränkte Beweglichkeit des Entweidewerkzeugs in Bezug auf horizontale Bewegungen dazu, dass eine Wartezeit und eine Bearbeitungszeit des Entnahmewerkzeugs von der Fisch- und Bauchhöhlenlänge abhängig sind, derart, dass die Verweilzeit des Entnahmewerkezugs im Fisch eingeschränkt ist. Es resultiert ein unbefriedigend bleibendes Entweide- und Reinigungsergebnis. Eine längere Verweilzeit erfordert eine Verringerung der Fördergeschwindigkeit der Fische. Dies steht dem Ziel entgegen, pro Stunde eine möglichst große Zahl von Fischen zu entweiden.

Ein gemäß DE 198 29 376 A1 bekanntes Entweidewerkzeug kann beim Absenken gegen eine abfallende Körperflanke bis auf den Grund der Bauchhöhle in der Höhe gesteuert werden. Eine dafür bekannte Stufenregelung sowie der fortlaufende Transport des Fisches während der vertikalen Annährung des Entweidewerkzeugs an die Körperflanke führen dazu, dass der Werkzeugkopf, z. B. ein Werkzeugelement, einer diskontinuierlichen, treppenförmigen Bewegungslinie folgen muss. Die daraus resultierende begrenzte Steilheit des Zustellweges führt bei gleicher Fördergeschwindigkeit dazu, dass das Entweidewerkzeug bei einer kürzeren Bauchhöhle später auf den Bauchhöhlengrund auftrifft als bei einer längeren Bauchhöhle, so dass auch dadurch ein nicht zufriedenstellendes Entweide- und Reinigungsergebnis resultiert.

Gemäß Stand der Technik ist es weiterhin bekannt, dass den genannten drei Entweidewerkzeugen ein viertes Entweidewerkzeug zum Nachreinigen nachgeordnet wird. Ein solches Entweidewerkzeug geht aus WO 2007/128386 A1 hervor. Das Nachreinigungs-Werkzeug ist an einem in der oder gegen die Förderrichtung linear verfahrbaren Schlitten angeordnet. Um das Nachreingungs-Werkzeug von einer vorderen Stelle in der Bauchhöhle bis zum Anus zu bewegen, wird die Geschwindigkeit des Werkzeugs in Förderrichtung größer als die Fördergeschwindigkeit des zu bearbeitenden Fisches gewählt. Gemäß WO 2007/128386 A1 ist zwar das Bewegungsfeld des Entweidewerkzeugs verbessert; infolge transversaler, linearer Steuerbewegungen bleiben jedoch Ansteuerung und Bewegungen im Bewegungsfeld eingeschränkt. Zudem ist das linear verfahrbare Entweidewerkzeug nicht für eine Reihenanordnung derartiger Werkzeuge in Mehrzahl geeignet.

Die erläuterten Einschränkungen bei den bekannten Entweide-Einrichtungen hinsichtlich steuerbarer Bewegungen des Entweidewerkzeugs begrenzen die Größe des Durchsatzes, also die Anzahl der pro Stunde zu verarbeitenden Fische. Nach alledem bestehen Ziele der Erfindung darin, die Bewegungen der an sich bekannten Entweidewerkzeuge (Sauger, Schaber, Kratzer, Messer) der Entweide-Einrichtung hinsichtlich einer wesentlichen Verringerung der Abhängigkeit von Bearbeitungszeit, von phänotypischen Fischparametern und von der Fischfördergeschwindigkeit flexibel zu gestalten.

Die Ziele werden in Verbindung mit den Merkmalen der eingangsgenannten Entweide-Einrichtung dadurch gelöst, dass jedes Entweidewerkzeug über ein Schwingen-System aufgehängt ist, das wenigstens zwei gelenkig miteinander verbundene Schwingen aufweist, nämlich an einem Ende des Schwingen-Systems eine Antriebs-Schwinge sowie am anderen Ende des Schwingen-Systems die das Entweidewerkzeug anlenkende Werkzeug-Schwinge, wobei das Schwingen-System weiterhin ein gelenkig mit den Schwingen und dem Entweidewerkzeug verbundenes, durch aneinander angelenkte Lenkstangen gebildetes Lenkgestänge aufweist, durch das Winkelstellungen zwischen den Schwingen sowie zwischen dem Entweidewerkzeug und der Werkzeug-Schwinge stufenlos steuerbar sind, wobei die Antriebs-Schwinge an einem von der Werkzeug-Schwinge fernen Antriebsende mit einem Schwingen-Schwenkantrieb schwenkbar angelenkt ist, der eine in der Entweide-Einrichtung stationär angeordnete Schwingen-Antriebsachse aufweist und zur Steuerung der Schwenkposition der Antriebsschwinge mit der Steuereinrichtung verbunden ist, wobei das Lenkgestänge mit wenigstens einem es steuernden Lenk-Schwenkantrieb steuerbar ist, der zur Steuerung der Winkelstellungen mit der Einrichtungs-Steuereinrichtung verbunden ist, und wobei die Einrichtungs-Steuereinrichtung und das damit gesteuerte Schwingen-System derart eingerichtet sind, dass das Entweidewerkzeug zum Bearbeiten des zu bearbeitenden Fisches mit diesem in Förderrichtung mitlaufend bewegbar ist.

Die Ziele werden in Verbindung mit den Merkmalen des eingangsgenannten Verfahrens dadurch gelöst, dass sämtliche Entweidewerkzeuge während ihrer Positionen in der Bauchhöhle in Abhängigkeit von der Bearbeitungsposition und der Bearbeitungsoperation in Fisch-Förderrichtung mit dem zu bearbeitenden Fisch mitlaufend bewegt werden, wobei die Mitlauf-Bewegungen mit Werkzeuggeschwindigkeiten durchgeführt werden, die kleiner, gleich oder größer als die Fisch-Fördergeschwindigkeit sind.

Die erfindungsgemäßen Maßnahmen führen zu einer Reihe von Vorteilen. Mit dem erfindungsgemäßen, für jedes Entweidewerkzeug eingerichteten Schwingen-System in Verbindung mit den Erfordernissen für die Entweidewerkzeuge und deren Bewegungssteuerung erreicht man, dass jedes Entweidewerkzeug mit seinem Bearbeitungskopf bzw. der Werkzeugspitze eines Arbeitselements innerhalb eines großen Bewegungsfeldes, das die Bauchhöhle in Höhe und Länge weitgehend abdeckt, zu jeder gewünschten Bearbeitungs-/Kontaktstelle bewegbar ist. Es handelt sich um ein dynamisches Bewegungsfeld derart, dass das Entweidewerkzeug mit gesteuerter Geschwindigkeit mit dem zu bearbeitenden Fisch in Förderrichtung mitläuft.

Das Entweidewerkzeug ist in seiner Höhenposition universell derart steuerbar, dass es, von dem geförderten Fisch aus betrachtet, insbesondere auf geradem Weg vertikal und insbesondere senkrecht zur Fischachse oder Mittelgräte sowohl in die Bauchhöhle hinein als auch aus dieser heraus bewegbar ist. Jedes Entweidewerkzeug folgt während der Mitlaufbewegung der ihm zugeordneten Bearbeitungskontur in der Bauchhöhle exakt. Die Wirkrichtung und die Geschwindigkeit der Werkzeuge sind in ihrem Wirkbereich frei steuerbar. Eines der Entweidewerkzeuge, das im Bereich des Anus arbeitet, wird so eingesteuert, dass die herkömmlich von der Größe der Fisch-Fördergeschwindigkeit abhängige und dadurch resultierende treppenförmige Bewegung entfällt und der Werkzeugkopf zuverlässig in Kontakt mit einem abfallenden oder ansteigenden Fischteil in der Bauchhöhle bleibt. Die Steuerung der Wirkgeschwindigkeit des Entweidewerkzeugs in der Bauchhöhle, also der Differenz der Fischgeschwindigkeit und der Werkzeuggeschwindigkeit in Fisch-Förderrichtung, führt zu besonders zufriedenstellenden Entweide- und Reinigungsergebnissen. So lässt sich die Reinigungsleistung durch Erhöhen der Verweildauer des Entweidewerkzeugs in dem zu entweidenden bzw. zu reinigenden Bereich wesentlich verbessern. Die Entweidewerkzeuge werden zuverlässig kollisionsfrei aus der Bauchhöhle herausbewegt.

Die in Reihe an der Bearbeitungslinie bzw. dem Förderweg angeordneten Entweidewerkzeuge weisen vorteilhaft im Wesentlichen übereinstimmende Schwingen-Systeme auf. Jedes Schwingen-System ist an einem stationären Ort in der Entweide-Einrichtung an drei ortsfesten (stationären) Drehpunkten aufgehängt und schwenkbar angelenkt. Vorteilhaft sind zwei der drei Drehpunkte an ein und demselben Ort angeordnet. Unter stationärer Anordnung ist jede Anordnung zu verstehen, mit der das Schwingen-System an in der Entweide-Einrichtung ortsfest positionierten Drehpunkten bzw. Antriebs-Schwenkachsen angelenkt ist. Die Entweide-Einrichtung kann als Einzelmodul, als Bestandteil einer Schlachtmaschine oder einer gesamten Schlachtlinie ausgeführt sein.

Die aneinander angelenkten Schwingen sowie das diese und das Entweidewerkzeug in gesteuerten Winkelstellungen haltende Lenkgestänge des Schwingen-Systems gewährleisten die Umsetzung von rotatorischen Steuerbewegungen, die die universelle Bewegung des Entweidewerkzeugs innerhalb des Bewegungsfeldes in eine Ebene, die durch die Fisch-Förderrichtung und die vertikale Bewegungskomponente des Entweidewerkzeugs aufgespannt wird, mit wenigstens drei Freiheitsgraden bewirken. Zur Bewegungssteuerung wirken der Schwingen-Schwenkantrieb und der Lenk-Schwenkantrieb auf optimale Weise aufeinander abgestimmt zusammen, um den Werkzeugkopf mittels Steuerung durch die Einrichtungs-Steuereinrichtung auf kurzem Weg zu der zu bearbeitenden Stelle und entlang des erforderlichen Bearbeitungsweges zu bewegen.

Besonders vorteilhaft lassen sich längs der Bearbeitungslinie vier Entweidewerkzeuge anordnen, die mit gleichen Schwingen-Systemen ausgestattet sind und zum Entweiden/Reinigen insbesondere auch bei großer Durchsatzgeschwindigkeit flexibel bewegbar sind. Eine besonders bevorzugte Bearbeitungsreihenfolge und Zuordnung von vier Entweide-Werkzeugen zu definierten Wirk-/Arbeitsbereichen besteht im Fall einer Schwanz voraus Förderung darin, dass längs der Bearbeitungslinie das erste Entweidewerkzeug bis zum Grund der Bauchhöhle und dann entlang der Mittelgräte bis zum Kopf bzw. zu den Kragenknochen bewegt wird. Das nachfolgende zweite Entweidewerkzeug tritt dann im Bereich des Anus in die Bauchhöhle ein und verlässt diese etwa im mittleren Längsbereich. Ein nachfolgendes drittes Entweidewerkzeug wird entlang der gleichen Ortskurve wie das erste Entweidewerkzeug bewegt. Ein abschließendes viertes Entweidewerkzeug wird im mittleren Längsbereich der Bauchhöhle in diese eingeführt und im Bereich des Anus aus der Bauchhöhle herausbewegt. Eine bevorzugte Verfahrensmaßnahme besteht darin, dass die Bearbeitungswege des zweiten Entweidewerkzeugs und des vierten Entweidewerkzeugs mit entgegengesetztem Richtungsverlauf übereinstimmen. Besonders vorteilhaft wird die Werkzeuggeschwindigkeit in Förderrichtung temporär etwa doppelt so groß oder größer als die Fisch-Fördergeschwindigkeit gewählt.

Es ist gefunden worden, dass die erfindungsgemäßen Ziele besonders vorteilhaft mit Schwingen-Systemen erreicht werden, die jeweils nur durch zwei in Reihe angelenkte Schwingen gebildet sind, nämlich durch die Antriebs-Schwinge und die Werkzeug-Schwinge. Man erhält eine raumsparende Anordnung mit dennoch uneingeschränkter Flexibilität der Bewegungssteuerung. Diese Gestaltung ist auch zur Wahrung von Hygieneanforderungen von Bedeutung. So bleibt der Mechanismus mit bewegbaren mechanischen Teilen, deren Betrieb und Wartung zu keiner Kontaminierung mit den zu bearbeitenden Fischen führen darf, besonders reduziert.

Eine bevorzuge Gestaltung besteht darin, dass das Schwingen-System und das zugehörige Lenkgestänge an zusammenfallenden festen Drehpunkten über konzentrische Antriebsachsen angelenkt werden.

Insbesondere ist das Lenkgestänge derart ausgebildet und mit den zugehörigen Schwingen verbunden, dass das Entweidewerkzeug in jeder Position der Schwingen und infolgedessen in jeder Bewegungsposition des Entweidewerkzeugs gleich ausgerichtet ist, ohne dass die Flexibilität der anzufahrenden Ortspunkte/-stellen der Bearbeitung beeinträchtigt wird. Dies erreicht man vorteilhaft dadurch, dass das Lenkgestänge durch Parallelogramm-Gestänge gebildet ist, wobei jede Schwinge parallel mit wenigstens einer genannten Lenkstange ausgerichtet bleibt.

In der Gestaltung mit einem Schwingen-System, das die beiden aneinander angelenkten Schwingen aufweist, wobei die Antriebsachsen des Schwingen-Schwenkantriebs und des Lenk-Schwenkantriebs konzentrisch sind, wird das Lenkgestänge vorteilhaft mit einer ersten Lenkstange und einer zweiten Lenkstange, die parallel zu der Antriebs-Schwinge liegen, und einer dritten Lenkstange, die parallel zu der Werkzeug-Schwinge liegt, ausgebildet. In dieser Gestaltung wird ein erstes Viergelenk, nämlich ein erstes Gestänge-Parallelogramm durch die Antriebs-Schwinge mit festem Drehpunkt, der dazu parallel liegenden inneren ersten Lenkstange sowie ein Paar kürzerer Lenkarme gebildet. Der eine kurze Lenkarm ist an einem Ende an dem einen ortsfesten Drehpunkt drehfest mit dem Lenk-Schwenkantrieb verbunden und am anderen Ende schwenkbar an die erste Lenkstange angelenkt. Die Werkzeug-Schwinge ist ein zweiarmiger Hebel mit einem langen Hebelarm und einem kurzen Hebelarm. Die Antriebs-Schwinge ist an einem freien Ende an dem anderen ortsfesten Drehpunkt drehfest mit dem Schwingen-Antrieb verbunden. Das andere Ende der Antriebs-Schwinge ist an den Drehpunkt zwischen den Hebelarmen der Werkzeug-Schwinge angelenkt, wobei der kurze Hebelarm den anderen kurzen Lenkarm des Paares kurzer Lenkarme des ersten Gestänge-Parallelogramms bildet. Eine äußere zweite Lenkstange liegt parallel zu der inneren ersten Lenkstange. Die äußere zweite Lenkstange ist an einem freien Ende an einem ortsfesten Drehpunkt angelenkt und an ihrem anderen Ende schwenkbewegbar mit einem langen Schenkel eines zweischenkligen Winkelhebels verbunden, der an einem Drehpunkt zwischen seinen Schenkeln an den Drehpunkt der Werkzeug-Schwinge angelenkt ist. Das Viergelenk mit den beiden ortsfesten Drehpunkten und den Drehpunkten des langen Schenkels des Winkelhebels bildet ein zweites offenes Gestänge-Parallelogramm. Der Winkelhebel bildet einen Koppelhebel, der mit kurzem Schenkel an die mit der Werkzeug-Schwinge parallele dritte Lenkstange angelenkt ist. Die dritte Lenkstange, der lange Hebelarm der Werkzeug-Schwinge sowie der kurze Schenkel des Winkelhebels und, gegenüberliegend, ein an den langen Hebelarm der Werkzeug-Schwinge und die dritte Lenkstange angelenkter Haltehebel, der das Entweidewerkzeug hält, bilden ein drittes geschlossenes Gestänge-Parallelogramm.

Mittels des Schwingen-Systems im Zusammenwirken mit der dieses steuernden Steuereinrichtung lässt sich wenigstens ein Entweidewerkzeug zum Mitlaufen mit dem zu bearbeitenden Fisch in Förderrichtung ohne Weiteres mit Geschwindigkeiten bewegen, die größer, zum Bespiel um das Zweifache, als die Fördergeschwindigkeit oder gleich der Fördergeschwindigkeit des zu bearbeitenden Fisches sind. Ebenso lässt sich dieses oder ein anderes der Entweidewerkzeuge in Förderrichtung mit Geschwindigkeiten bewegen, die kleiner als die Fördergeschwindigkeit des zu bearbeitenden Fisches sind. Es bleibt von besonderer Bedeutung, dass während eines solchen Betriebs jeder beliebige Punkt in der Bauchhöhle auf kurzen Wegen anfahrbar ist.

Gemäß einer Ausgestaltung ist die Einrichtungs-Steuereinrichtung mit einer Kontakt-Steuerung verbunden, die kontinuierlich den Bearbeitungskontakt des Entweidewerkzeugs mit einen zu bearbeitenden Fischteil feststellt und auf Basis der Kontaktfeststellung entlang eines Bearbeitungsweges kontinuierlich geregelt aufrechterhält. In Kombination mit der Ansteuerung eines beliebigen Bearbeitungspunktes erreicht man ein Anschmiegen des Entweidewerkzeugs an die zu bearbeitende Kontur mit abfallenden, ansteigenden und/oder gekrümmten Teilen oder Abschnitten in der Bauchhöhle. In Verbindung mit der erfindungsgemäßen Steuerung der Mitlaufbewegung ist die Kontaktsteuerung sehr vorteilhaft, da einfache Mittel zum Erfassen der Bearbeitungskontur in der Bauchhöhle von außerhalb des Fisches vor oder während der Bearbeitung nicht zur Verfügung stehen.

Die Kontakt-Steuerung ist vorzugsweise durch einen Steuerabschnitt der Einrichtungs-Steuereinrichtung gebildet. Diese kann allgemein eine zentrale Steuereinrichtung der Entweide-Einrichtung oder auch einer zugehörigen Anlage oder Maschine sein. Die Einrichtungs-Steuereinrichtung kann allgemein auch durch selbstständige, vereinzelte Steuermodule gebildet sein. Es kommen allgemein übliche Computer-Steuermittel, die insbesondere programmierbar sind, zum Steuern und Regeln der genannten Funktionen zum Einsatz. Vorteilhaft ist die Einrichtungs-Steuereinrichtung mit wenigstens einem Kontakt-Messelement verbunden, das zum Steuern wenigstens eines der beiden Steuerantriebe, d. h. des Steuerantriebs der Antriebs-Schwinge und des Steuerantriebs des Lenkgestänges, ein Antriebsmoment des zugehörigen Schwenk-Steuerantriebs misst. In Verbindung mit der Kontakt-Steuerung ist die Einrichtungs-Steuereinrichtung so eingerichtet und konfiguriert, dass die Regelung kontinuierlich mit unterbrechungsfreiem Soll/Ist-Vergleich erfolgt, wobei eine verzögerungsfreie Nachführung sichergestellt ist.

Vorteilhaft ist die Einrichtungs-Steuereinrichtung derart eingerichtet, dass der Bearbeitungskontakt wenigstens eines der genannten Entweidewerkzeuge, das in Fisch-Förderrichtung mit großer Geschwindigkeit, zum Beispiel mit zweifacher Fisch-Fördergeschwindigkeit gegen eine sich erhöhenden Körperabschnitt arbeitet, unterbrechungsfrei aufrechterhalten bleibt. Diese Maßnahme wird erfindungsgemäß erst dadurch möglich, dass das Entweidewerkzeug mittels des gesteuerten Schwingen-Systems innerhalb des genannten Bearbeitungsfeldes stetig in jede beliebige Arbeits-/Bearbeitungsposition bewegbar ist.

Benachbarte Entweidewerkzeuge können insbesondere während der Mitlaufbewegung in einen besonders kleinen Übergabeabstand zwischen den beiden Entweidewerkzeugen gebracht werden, derart, dass die Bauchhöhle beim Übergang bzw. Wechsel von einem Entweidewerkzeug zum anderen zuverlässig mittels der Entweidewerkzeuge offengehalten wird.

Eine bevorzugte Verfahrensgestaltung besteht darin, dass jedes Entweidewerkzeug zum Durchführen einer zugehörigen Bearbeitungsoperation in der Bauchhöhle durch Rotationsbewegungen mit wenigstens drei Freiheitsgraden in einer Ebene, die durch die Bearbeitungslinie und eine vertikale Bewegungskomponente des Entweidewerkzeugs aufgespannt wird, bewegt wird, wobei jeweils eine Arbeitsbewegung des Entweidewerkzeugs, nämlich eine in die Bauchhöhle hineinführenden Einsteuerbewegung, eine aus der Bauchhöhle herausführende Aussteuerbewegung sowie eine Werkzeug-Mitlaufbewegung, mit der das Entweidewerkzeug mit dem zu bearbeitenden Fisch während des Eingriffs in die Bauchhöhle mitläuft, durch ein Zusammenwirken der Rotationsbewegungen resultiert, die mittels eines stationär angeordneten und schwenkbar aufgehängten Schwingen-Systems mit wenigstens zwei aneinander angelenkten und gemäß der genannten Steuergrößen gesteuerten und gelenkten Schwingen erzeugt werden.

Die Gestaltungen der Erfindung zielen stets darauf ab, die Verweilzeit der Entweidewerkzeuge in der Bauchhöhle ohne Einschränkung durch die Fisch-Fördergeschwindigkeit zu verlängern. Die erfindungsgemäß erzielten Mitlauf-Bewegungen, mit denen die Entweidewerkzeuge in Förderrichtung mit den zu bearbeitenden Fischen mitlaufen, können je nach Bearbeitungsort, d. h. in Abhängigkeit von der Örtlichkeit der Bearbeitungsstelle und der Bearbeitungsanforderung gesteuert werden. Zum Beispiel ist eine Steuerung derart, dass das Entweidewerkzeug in Förderrichtung mit gleicher Geschwindigkeit wie die Fisch-Fördergeschwindigkeit bewegt wird. Dadurch lässt sich die Zeit, mit der ein Einwirken zum Abtrennen und/oder Absaugen eines Fischteils erforderlich ist, einstellen und programmieren. Entsprechend kann mit einer Werkzeuggeschwindigkeit in Förderrichtung, die geringer als die Fisch-Fördergeschwindigkeit ist, die Bearbeitung in einem Längsbereich der Bauchhöhle nach Maßgabe der Differenzgeschwindigkeit örtlich und/oder zeitlich intensiviert werden. Eine Mitlaufgeschwindigkeit des Entweidewerkzeugs, die wesentlich größer als die Fisch-Fördergeschwindigkeit ist, wird über einen längeren Abschnitt am Bauchhöhlenboden und in einem aufsteigenden Schrägbereich der Bauchhöhle genutzt, um eine Reinigung durch Schaben und ein zuverlässiges Abreißen von abgeschabten Teilen zu erzielen. Andererseits wird eine kurze temporäre Erhöhung der Werkzeuggeschwindigkeit in Mitlaufrichtung über die Fisch-Fördergeschwindigkeit hinaus genutzt, um das Werkzeug insbesondere am kopfseitigen Ende der Bauchhöhle kollisionsfrei aus der Bauchhöhle herauszubewegen. Umgekehrt kann die Werkzeuggeschwindigkeit des mit dem Fisch mitlaufenden Entweidewerkzeugs auch gezielt temporär verringert werden, um es aus der Bauchhöhle herauszuführen.

Das mit den Maßnahmen der Erfindung erzielte Bewegungsfeld für die Entweidewerkzeuge bzw. deren Werkezugelemente und -spitzen ermöglicht vorteilhaft auch eine Bewegungssteuerung, derart, dass wenigstens ein Entweidewerkzeug während wenigstens einer im Verhältnis zur Bearbeitungszeit des Entweidewerkzeugs kurzen Phase in der Bauchhöhle in nicht mit dem Fisch mitlaufender Position bewegt wird. Insbesondere kann das in Bezug auf die Bearbeitungslinie bzw. horizontal feststehende Entweidewerkzeug mit einer Bewegung gegen die Fisch-Förderrichtung in die Bauchhöhle eingebracht werden, so dass die anschließend zur Verfügung stehende Verweilzeit während der Mitlaufbewegung vergrößert bzw. weiter optimiert wird. Es kann auch eine kurze Phase eingerichtet werden, in der das Entweidewerkzeug während der Bearbeitung in Bezug auf die Bearbeitungslinie unbewegt bleibt, also ortsfest ist.

Es wird deutlich, dass im Ganzen die Flexibilität der Bewegungssteuerung und damit die Entweide- und Reinigungsqualität ohne Einschränkung durch die Größe der Durchsatzgeschwindigkeit erzielt werden.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und -möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als strukturell selbstständiges Detailbeispiel für andere nicht oder nicht vollständig beschriebene unter die Erfindung fallende Ausführungen und Gestaltungen zu verstehen. Es zeigen
- Fig. 1 - 3: in Längsansicht eine erfindungsgemäße Entweide-Einrichtung mit drei an dazugehörigen Schwingen-Systemen aufgehängten Entweidewerkzeugen,
- Fig. 4: eine Antriebseinrichtung zum Antrieb eines Entweidewerkzeugs und
- Fig. 5: in Längsansicht einen zu bearbeitenden Fisch mit Werkzeugwegen.

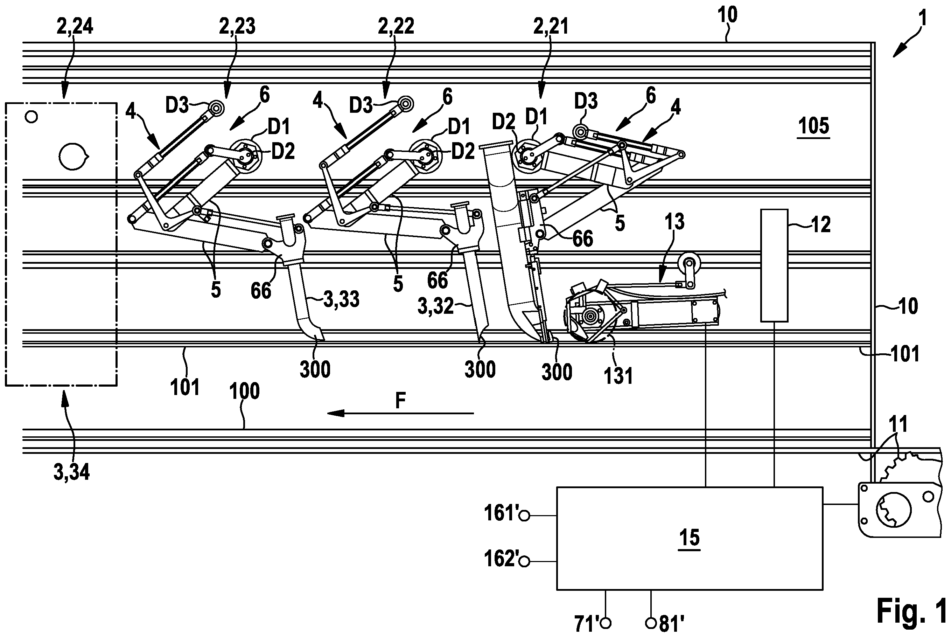

Eine in Fig. 1 bis 3 dargestellte erfindungsgemäße Entweide-Einrichtung 1 ist nur mit zur Erfindungsbeschreibung wesentlichen Teilen und Abschnitten dargestellt. Drei Entweidewerkzeuge 3, 31, 32, 33 mit Werkezugspitzen 300 sind längs eines Förderweges oder einer Bearbeitungslinie 100 in Reihe hintereinander angeordnet. Die Entweidewerkzeuge 3 gehören zu drei entsprechenden Bearbeitungsstationen 2, die in der Reihenfolge ihrer Anordnung längs der Bearbeitungslinie 100 und, in Fisch-Förderrichtung F betrachtet, mit 21, 22 und 23 bezeichnet sind. Entsprechend sind die in Förderrichtung F aufeinanderfolgenden Entweidewerkzeuge mit 31 (erstes Entweidewerkzeug), 32 (zweites Entweidewerkzeug) und 33 (drittes Entweidewerkzeug) bezeichnet. Vorteilhaft umfasst eine erfindungsgemäße Entweide-Einrichtung noch eine weitere nachgeordnete Bearbeitungsstation 2, 24, die nur in Fig. 1 strichpunktiert dargestellt ist und mit einem nicht dargestellten Nachreinigungswerkzeug 3, 34 (viertes Entweidewerkzeug) bestückt ist.

Stromaufwärts befindet sich vor der ersten Bearbeitungsstation 21 eine Bauchöffnungs-Einrichtung 13. Dieser ist eine nur in Fig. 1 schematisch dargestellte Fisch-Messeinrichtung 12 vorgeordnet.

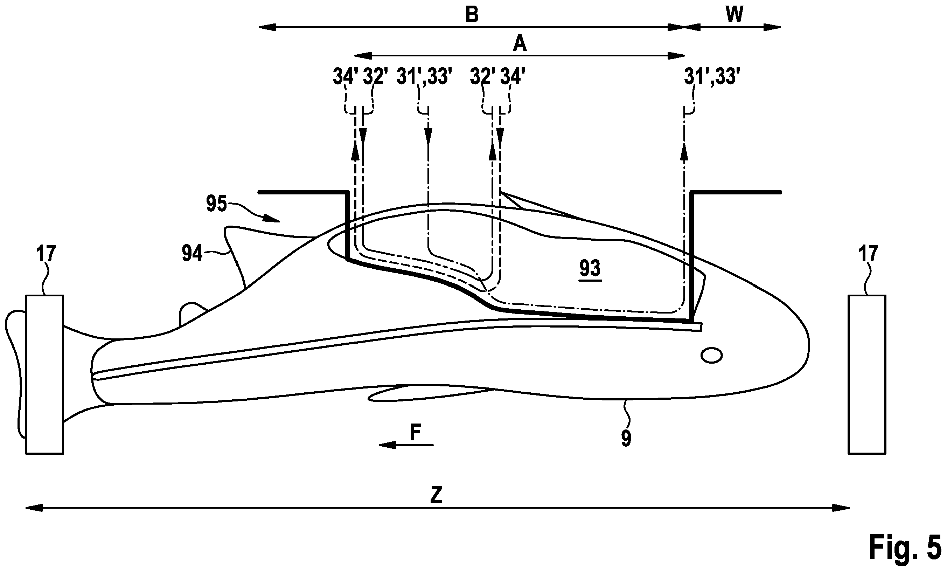

Die Entweide-Einrichtung 1 ist mit einem Förderer 11 ausgestattet, der nicht dargestellte Fischaufnahmen aufweist, die Fische 9 seriell in Förderrichtung F fördern. Z. B. sind an einem an sich bekannten und üblichen Förderer 11 Fischaufnahmen mit Schwanzklammern 17 angeordnet, die die zu fördernden Fische 9 am Schwanz erfassen und Schwanz voraus in horizontaler Rückenlage transportieren. Ein derart geförderter Fisch 9, der in Fig. 1 bis Fig. 3 nicht dargestellt ist, geht aus Fig. 5 hervor. Insbesondere werden allgemein ungeköpfte Fische entweidet. Der Transport zwischen zwei aufeinanderfolgenden Schwanzklammern 17 erfolgt mit einer Zykluszeit Z. Mit den nachstehend beschriebenen erfindungsgemäßen Maßnahmen erreicht man z. B. eine Zykluszeit von 2,5 s/Fisch, entsprechend einer Durchsatzrate von 24 Fischen pro Minute. Dabei beträgt die mittlere Länge der Bauchhöhle eines Fisches 9 ungefähr 500 mm mit einem entsprechenden Bearbeitungsbereich A.

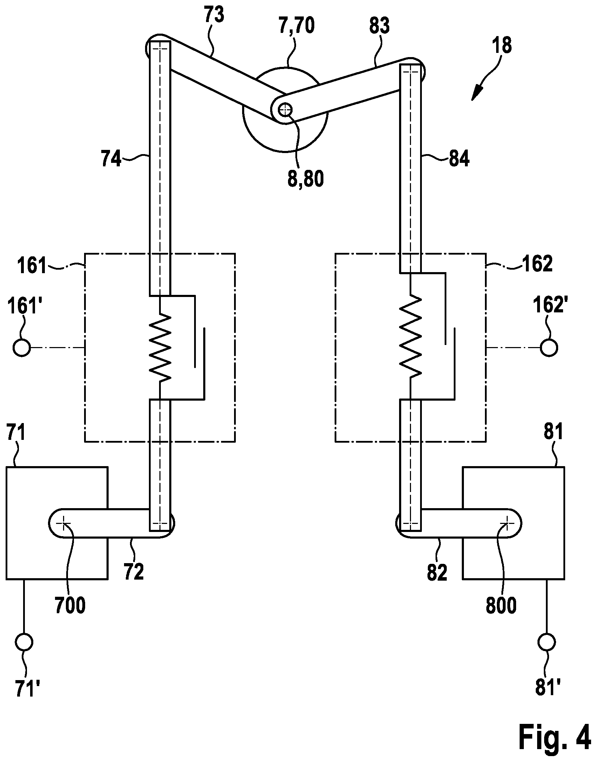

Die Entweide-Einrichtung 1 weist weiterhin eine rechnerbetriebene Einrichtungs-Steuereinrichtung 15 auf, die die einzelnen Teile und Aggregate der Entweide-Einrichtung 1 zum Durchführen der Bearbeitungsoperationen steuert. Die Einrichtungs-Steuereinrichtung 15 ist nur in Fig. 1 schematisch dargestellt. Dort sind Steuerverbindungen mit dem Förderer 11, der Fisch-Messeinrichtung 12 und der Bauchöffnungs-Einrichtung 13 ersichtlich. Im Übrigen ist die Einrichtungs-Steuereinrichtung 15 über nicht dargestellte Steuer- oder Signalwege mit Antrieben der Bearbeitungsstationen 2 verbunden. Zugehörige Signal-/Steuerports, die beliebige Schnittstellen sein können, sind in Fig. 1 und Fig. 4 mit 71' 81', 161' und 162' bezeichnet.

Die einzelnen Teile und Aggregate der Bearbeitungsstationen 2, der Bauchöffnungs-Einrichtung 13 und des Förderers 11 sowie die Fisch-Messeinrichtung 12 und die Einrichtungs-Steuereinrichtung 15 sind an einem nur schematisch dargestellten Gestell oder Rahmen 10 der Entweide-Einrichtung 1 angeordnet. Zum Beispiel weist das Gestell eine Montagewand 105 auf, an deren in Fig. 1 bis Fig. 3 zu sehender Vorderseite der Förderweg verläuft, über dem die Entweidewerkzeuge 3 angeordnet sind. An der Rückseite der Montagewand 105 sind insbesondere mechanische Bauteile der Entweide-Einrichtung 1 angeordnet. Dazu gehört insbesondere jede Antriebseinrichtung 18.

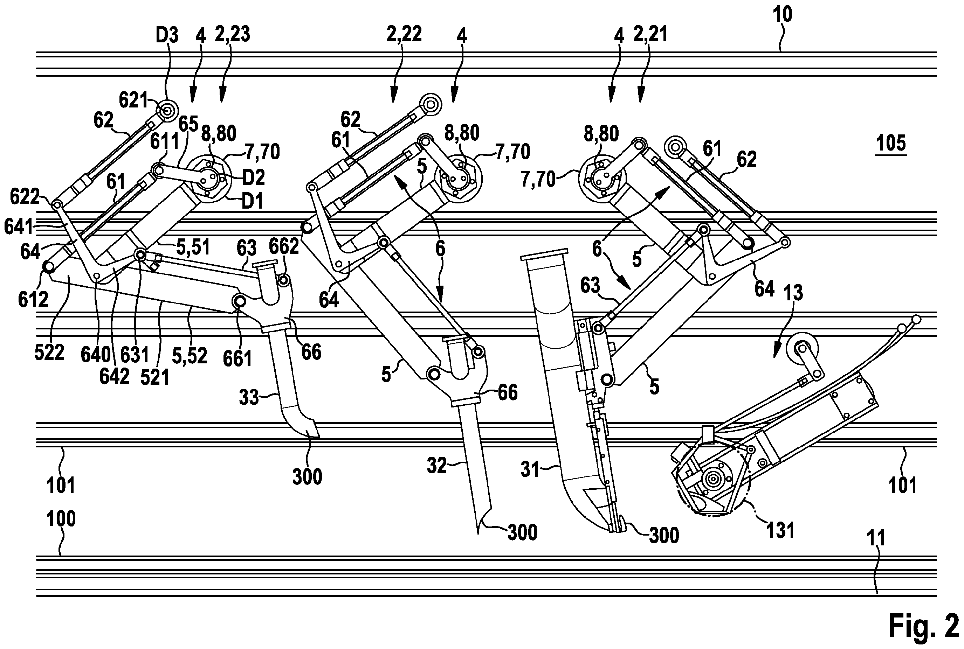

Die Bearbeitungsstationen 2 sind mit Ausnahme der jeweils montierten Entweidewerkzeuge 3 im Wesentlichen übereinstimmend ausgebildet. Es werden daher exemplarisch die Teile einer Bearbeitungsstation, z. B. der Bearbeitungsstation 23 mit in Fig. 2 angegebenen Bezugszeichen beschrieben. Jede Station 2 weist eine in Fig. 4 dargestellte Antriebseinrichtung 18 mit den zugehörigen Steuer-/Signalports 71', 81', 161' und 162' auf. Die Einrichtungs-Steuereinrichtung 15 in Fig. 1 zeigt nur die Steuerschnittstellen für eine der Bearbeitungsstationen 2.

Erfindungsgemäß ist jedes Entweidewerkzeug 3 über ein Schwingen-System 4 an drei ortsfesten, in der Entweide-Einrichtung 1 gestell- oder gehäusefesten (stationären) Drehpunkten D1, D2 und D3 aufgehängt. Die Drehpunkte D1, D2 fallen örtlich zusammen. Die Schwingen-Systeme 4 sind mit sämtlichen Hebeln und dem Mechanismus der Schwenkanlenkungen baugleich ausgebildet.

Das Schwingen-System 4 setzt sich aus zwei Schwingen 5, nämlich einer Antriebs-Schwinge 51 und einer Werkzeug-Schwinge 52 sowie daran angelenkten Lenkstangen 61, 62, 63 eines Lenkgestänges 6 zusammen. Die Schwingen 5 und Lenkstangen 61, 62, 63 sind Hebel, die an Drehpunkten um Schwenkachsen schwenkbewegbar sind, die quer bzw. senkrecht zur Förderrichtung F und einer zu der vertikalen Montagewand 105 parallelen gedachten Vertikalebene liegen.

Im Ausführungsbeispiel ist das eine Ende der Antriebs-Schwinge 51 an dem festen Drehpunkt D1 mit einem Schwingen-Schwenkantrieb 7, z. B. einer angetriebenen, als Antriebsache 70 bezeichneten Hohlwelle drehfest verbunden. Die Antriebsachse 70 liegt parallel zu den Schwenkachsen der Schwingen 5 und der Lenkstangen 61, 62, 63. Die Werkzeug-Schwinge 52 ist um eine Schwenkachse 640 schwenkbar an das andere Ende der Antriebs-Schwinge 51, die ein einarmiger Hebel ist, angelenkt. Die Werkzeug-Schwinge 52 ist ein zweiarmiger Hebel mit einem langen Hebelarm 521 und einem kurzen Hebelarm 522, wobei die Schwenkanlenkung um die Schwenkachse 640 an dem Drehpunkt zwischen den beiden Hebelarmen 521, 522 vorgesehen ist.

Das Lenkgestänge 6 ist mit seinen Lenkstangen 61, 62, 63 derart eingerichtet, dass die Lenkstangen 61, 62, 63, die Antriebs-Schwinge 51 und die Werkzeug-Schwinge 52 Gestänge-Parallelogramme bildende Viergelenke sind. Die Antriebs-Schwinge 51 liegt parallel mit den beiden Lenkstangen 61 und 62. Die erste Lenkstange 61 befindet sich als innere Lenkstange zwischen der Antriebs-Schwinge 51 und der zweiten, äußeren Lenkstange 62.

Ein geschlossenes erstes Gestänge-Parallelogramm (Antriebs-Viergelenk) wird durch die Antriebs-Schwinge 51, der damit parallelen ersten Lenkstange 61 sowie ein Paar kürzerer Lenkarme gebildet. Der eine kurze Lenkarm ist ein Antriebsarm 65, der an einem Ende drehfest mit einer Antriebsachse 80, zum Beispiel einer Antriebswelle, und am anderen Ende um eine Schwenkachse 611 an das eine Ende der ersten Lenkstange 61 schwenkbar angelenkt ist. Die Antriebsachse 80 durchfasst die Hohlwelle der Antriebsachse 70, wobei die beiden Antriebsachsen 70, 80 an den zusammenfallenden festen Drehpunkten D1, D2 konzentrisch gelagert sind. Der andere kurze Lenkarm des ersten Gestänge-Parallelogramms wird durch den kurzen Hebelarm 522 der Werkzeug-Schwinge 52 gebildet, der um eine Schwenkachse 612 an die Lenkstange 61 angelenkt ist.

Die zweite Lenkstange 62 ist an einem Ende an dem festen Drehpunkt D3 um eine stationär angeordnete Schwenkachse 621 schwenkbar und an ihrem anderen Ende um eine Schwenkachse 622 schwenkbar an einen zweischenkligen Koppelhebel, der durch einen Winkelhebel 64 gebildet ist, angelenkt. Dieser weist einen langen Schenkel 641 und einen kurzen Schenkel 642 auf. Der Winkelhebel 64 ist in seinem Winkel-Drehpunkt zwischen den beiden Schenkel 641, 642 um die Schwenkachse 640 schwenkbar an den Drehpunkt zwischen den beiden Hebelarmen 521, 522 der Werkzeug-Schwinge 52 angelenkt. Ein mit den festen Drehpunkten D1/D2 und D3 und mit den zu den Schwenkachsen 622, 640 gehörenden Drehpunkten gebildetes Koppel-Viergelenk ist ein zweites offenes Gestänge-Parallelogramm.

Die dritte Lenkstange 63 ist an einem Ende an das freie Ende des kurzen Schenkels 642 um eine Schwenkachse 631 und an ihrem anderen Ende um eine Schwenkachse 662 an das eine Ende eines Haltehebels 66 schwenkbar angelenkt. Der Haltehebel 66 ist an seinem anderen Ende um eine Schwenkachse 661 schwenkbewegbar mit der Werkzeug-Schwinge 52 verbunden. Der lange Hebelarm 521 der Werkzeug-Schwinge 52, die damit parallele Lenkstange 63, der Haltehebel 66 und der kurze Schenkel 642 des Winkelhebels 64 bilden ein das Entweidewerkzeug 3 anlenkendes Werkzeug-Viergelenk in Form eines geschlossenen dritten Gestänge-Parallelogramms.

Der Haltehebel 66 trägt das Werkzeug 3. Der Hebelwinkel zwischen den Schenkeln 641 und 642 und die Winkelstellung des Haltehebels 66 bestimmen die Arbeitsausrichtung des Entweidewerkzeugs 3. Jedes Entweidewerkzeug 3 wird prinzipiell in einer gegen die Förderrichtung F gerichteten steilen Ausrichtung gehalten. Diese Ausrichtungen der Entweidewerkzeuge 31, 32, 33 stimmen im Ausführungsbeispiel überein, wobei die Hebelwinkel der drei zu den Entweide-Werkzeugen 31, 32, 33 gehörenden Winkelhebel 64 unterschiedlich sind. Der Hebelwinkel des Winkelhebels 64 der ersten Bearbeitungsstation 21 ist spitz, und die Hebelwinkel der folgenden Bearbeitungsstationen 22, 23 sind, in dieser Reihenfolge, zunehmend größer stumpfwinkelig. Entsprechend nehmen in der Darstellung gemäß Fig. 1, in der sich die Entweidewerkzeuge 31, 32, 33 in Ausgangs- oder Rückholpositionen befinden, die Ausgangs-Abstände zwischen den Lenkstangen 61, 62 paarweise zu, wobei die Antriebs-Schwingen 51 und die Werkzeug-Schwingen 52 jeweils gleichlang dimensioniert sind. Es ist zudem ersichtlich, dass das Schwingen-System 4 nach Bedarf in einem Raum stromaufwärts des Entweidewerkzeugs 3, zum Beispiel in der Bearbeitungsstation 21, oder stromabwärts des Entweidewerkzeugs 3, zum Beispiel wie in den Bearbeitungsstationen 22, 23, angeordnet werden. Entsprechend sind die Schenkel 641, 642 der Winkelhebel 64 orientiert. Die Erfindung ist auf das im Ausführungsbeispiel dargestellte Anordnungsmuster der Schwingen-Systeme 4 hinsichtlich des Erzeugens der Mitlaufbewegungen der Entweidewerkzeuge 31, 32, 33 nicht eingeschränkt.

Man erkennt, dass durch das Lenkgestänge 6 Winkelstellungen zwischen der Antriebs-Schwinge 51 und der Werkzeug-Schwinge 52 einerseits und andererseits zwischen dem Entweidewerkzeug 3 und der Werkzeug-Schwinge 52 nach Maßgabe der gesteuerten Antriebs-Schwenkpositionen der Antriebsachsen 70 und 80 stufenlos steuerbar sind. Durch das Zusammenwirken der beschriebenen Gestänge-Parallelogramme lässt sich die Ausrichtung des Entweidewerkzeugs 3 in jeder Position des Entweidewerkzeugs 3 beibehalten. Dies wird durch die gleiche Ausrichtung der Werkzeuge 31, 32, 33 gemäß Fig. 1 bis Fig. 3 illustriert. Wie ersichtlich, werden im Ausführungsbeispiel die Entweidewerkzeuge 31, 32, 33 auch zueinander in paralleler Ausrichtung gehalten. Im Übrigen wird die Werkzeugspitze 300 mittels des Schwingen-Systems 4 in jede beliebige gesteuerte Position verfahren bzw. ist in diese bewegbar. Wie aus Fig. 1 bis Fig. 3 ersichtlich, sind die Werkzeugspitzen 300 insbesondere als Saugöffnungen von Saugrohren ausgebildet, wobei die Saugöffnungen Schabe-, Messer- oder Kratzkanten aufweisen. Zum Absaugen von Eingeweiden bzw. deren Teilen sind Saugrohre der Entweidewerkzeuge 3, wie dies nicht dargestellt ist, jeweils mit einer Saugeinrichtung verbunden, die durch die Einrichtungs-Steuereinrichtung 15 werkzeugbezogen gesteuert wird.

Die in Fig. 4 dargestellte Antriebseinrichtung18 ist sowohl für den Schwingen-Schwenkantrieb 7 als auch für den Lenk-Schwenkantrieb 8 mit Antriebsmotoren 71, 81 ausgestattet, die vorzugsweise durch steuerbare Servomotoren gebildet sind. Der Schwingen-Antrieb 7 umfasst einen drehfest mit der Antriebswelle 700 der Antriebs-Schwinge 51 verbundenen Kurbelarm 73. Die Antriebswelle 700 des Motors 71 ist drehfest mit einer Motorkurbel 72 verbunden, und freie Enden der Kurbeln 72, 73 sind schwenkbar an die Enden einer Koppelstange 74 angeschlossen. An oder in der Koppelstange 74 ist ein Messnehmer 161 angeordnet, der über eine Schnittstelle 161' mit der Einrichtungs-Steuereinrichtung 15 verbunden ist. Der Messnehmer 161 ist derart ausgebildet, dass er im Ergebnis analog die mit der Koppelstange 74 übertragene Last kontinuierlich feststellt. Dadurch erreicht man eine nachstehend noch näher beschriebene Kontaktsteuerung mittels der Einrichtungs-Steuereinrichtung 15, indem der Messnehmer 161 jede Veränderung des Antriebsmoments infolge einer Belastung oder Entlastung des Werkezugskopfes im Arbeitsbetrieb feststellt und die Position des Werkzeugkopfes entsprechend stufenlos kontinuierlich steuert. Jede andere Kontaktsteuerung mit entsprechender Funktion kann vorgesehen werden.

Der Lenk-Schwenkantrieb 8 ist im Ausführungsbeispiel so wie der Schwingen-Schwenkantrieb 7 angeordnet und ausgebildet. Der Lenk-Schwenkantrieb 8 wird über die Koppelstange 84 und die schwenkbar daran angelenkten Kurbeln 82, 83 betrieben. Die Kurbel 82 ist drehfest mit einer Antriebswelle 800 des Antriebsmotors 81 verbunden. Die Kurbel 83 ist drehfest mit der Antriebsachse 80 verbunden. Ein Messnehmer 162 misst an der Koppelstange 84 kontinuierlich den Lastzustand des Antriebs. Die Antriebsmotoren 71, 81 werden in Abhängigkeit von den festgestellten Lastzuständen mittels der Einrichtungs-Steuereinrichtung 15 gesteuert.

Anhand der Fig. 1 bis 3 sowie der Fig. 5 wird die Fischbearbeitung zum Entweiden gemäß den erfindungsgemäßen Maßnahmen näher erläutert.

In Fig. 1 befinden sich sämtliche Werkzeuge 3 in der Rückzugs- oder Wartestellung in einer Höhe oberhalb der Höhe eines in Fig. 1 nicht dargestellten Fischkörpers. Die Werkzeugspitzen 300 befinden sich in der Höhe einer Positionslinie 101. Gleichfalls befindet sich ein Kreismesser 131 der Bauchöffnungs-Einrichtung 13 in der Höhe der Positionslinie 101. Jedes Entweidewerkzeug 3 nimmt nach Verlassen der Wirkposition im Fisch 9 die Rückzugsposition nach Ablauf einer Werkzeug-Rückkehrzeit W innerhalb der Zykluszeit Z ein. Das heißt, dass das Entweidewerkzeug 3 zur Bearbeitung für den nächsten Fisch bzw. Zyklus zur Verfügung steht.

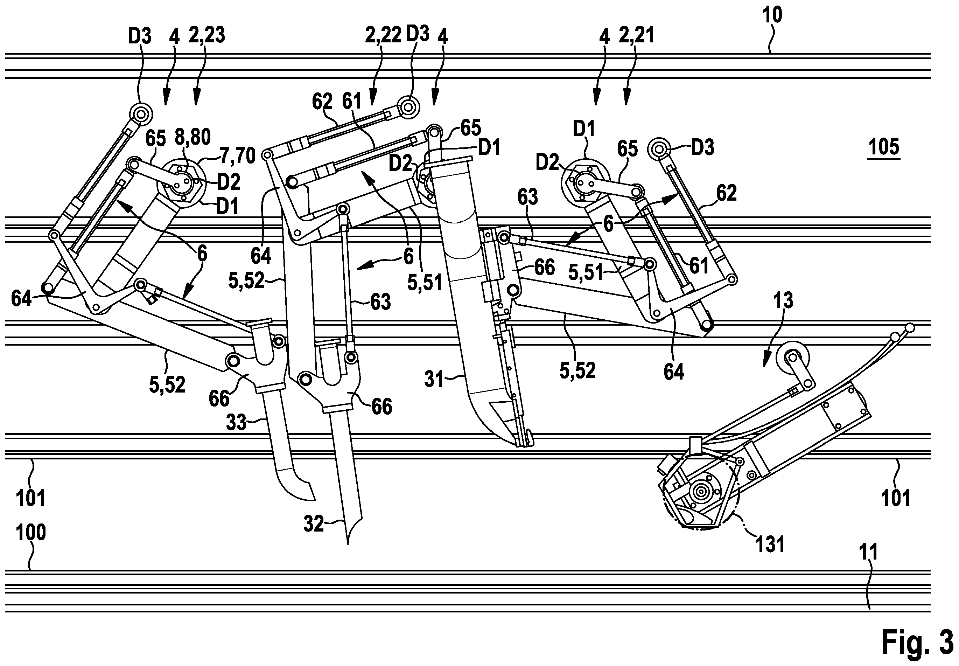

In Fig. 2 befindet sich das Kreismesser 131 der Bauchöffnungs-Einrichtung 13 im Arbeitszustand, in dem es die Bauchhöhle 93 des zu bearbeitenden Fisches 9 durch Aufschlitzen öffnet. Während dieses Vorgangs wird das erste Entweidewerkzeug 31, nämlich ein Sauger, in die Bauchhöhle 93 hineinbewegt. Noch während sich das Kreismesser 131 in der Bauchhöhle 93 befindet, wird das zweite Entweidewerkzeug 32, nämlich ein Kratzer, in die Bauchhöhle 93 hineinbewegt und mit seinem Werkzeugkopf in die Höhe des Werkzeugkopfes des Entweidewerkzeugs 31 gebracht, wobei auch der Abstand zwischen den beiden Werkzeugköpfen verringert wird bzw. diese aufeinander zu bewegt werden. Das Kreismesser 131 wird dann in seine Rückzugsposition gebracht und die Entweidewerkzeuge 31, 32 setzen die Bearbeitung in der Bauchhöhle 93 des Fisches 9 fort. In Fig. 3 ist das Entweidewerkzeug 31 bereits aus der Bauchhöhle 93 herausbewegt worden, wobei sich die Werkzeugspitze 300 wieder in der Höhe der Positionslinie 101 befindet, die weiter stromaufwärts liegende Rückzugsposition jedoch noch nicht erreicht ist. Das Kreismesser 131 der Bauchöffnungs-Einrichtung 13 befindet sich bereits im Eingriff mit dem folgenden Fisch. Inzwischen ist das Entweidewerkzeug 33 aus seiner Rückzugsposition in eine Wirkposition bewegt worden, in der sich der Werkzeugkopf des Entweidewerkzeugs 33 in der Nähe des Werkzeugkopfes des Entweidewerkzeugs 32 befindet, die Werkezugsköpfe also aufeinander zu bewegt worden sind. In dieser bzw. der anschließenden Phase wird das Entweidewerkzeug 32 aus der Bauchhöhle 93 herausbewegt und in seine Rückzugsposition verfahren. Das Entweidewerkzeug 33 setzt seine Bearbeitung fort. Das nicht dargestellte Entweidewerkzeug 34 wird dann ebenso wie zuvor die Entweidewerkzeuge 31, 32 in die Bauchhöhle 93 hineinbewegt und mit seinem Werkzeugkopf in die Höhe des Werkzeugkopfes des Entweidewerkzeugs 33 gebracht. In dieser Phase wird das Entweidewerkzeug 33 aus der Bauchhöhle 93 herausbewegt.

Erfindungsgemäß durch Mitlauf-Bewegungen erreichte Werkezugwege der Entweidewerkzeuge 31, 32, 33 und 34 gehen im Beispiel aus Fig. 5 hervor. Dort sind die zugehörigen Wege mit Linien 31', 32', 33' und 34' eingetragen. Das erste Entweidewerkzeug 31 wird, von dem schwanzseitigen Ende der Bauchhöhle 93 aus betrachtet, etwa nach zwanzig Prozent Förderstrecke im Bearbeitungsbereich A in die Bauchhöhle 93 hineinbewegt. Vorteilhaft wird das Entweidewerkzeug 31 aus seiner Rückzugsposition in einer kurzen Phase des Zustellweges mit der Werkzeugspitze 300 gegen die Fisch-Förderrichtung F bewegt und abgesenkt. Um eine lange Verweilzeit zu erzielen, wird das Entweidewerkzeug 31 mittels des gesteuerten Schwingen-Systems 4 mit dem Fisch 9 in Fisch-Förderrichtung F mit diesem mitlaufend bewegt, und zwar mit einer Werkzeuggeschwindigkeit in Fisch-Förderrichtung F, die zum Beispiel etwa ein Drittel der Fisch-Fördergeschwindigkeit beträgt oder größer ist. Das Entweidewerkzeug 31 wird kopfseitig aus der Bauchhöhle 93 herausbewegt, und zwar vorteilhaft dadurch, dass in diesem Bereich bzw. in der zugehörigen Bewegungsphase die Werkzeuggeschwindigkeit in Fisch-Förderrichtung F erhöht wird.

Das Entweidewerkzeug 32 läuft beim Eintritt in die Bauchhöhle 93 im Bereich des Anus 95 mit dem Fisch 9 in Fisch-Förderrichtung F mit und arbeitet entlang eines Arbeitsabschnitts von ca. 40% am Grund der Bauchhöhle 93, um dann im Bereich vor der Längsmitte der Bauchhöhle 93 aus dieser herausbewegt zu werden. Auch das Werkzeug 32 bewegt sich in Fisch-Förderrichtung F mit dem Fisch 9 mit, so dass eine ausgeprägte Verweilzeit erzielt wird.

Das dritte Entweidewerkzeug 33 wird anschließend auf dem gleichen Weg wie das erste Entweidewerkzeug 31 bewegt. Auch dieses Entweidewerkzeug wird während seines Arbeitsbetriebs in Fisch-Förderrichtung F mit einer Werkzeuggeschwindigkeit bewegt, die kleiner als die Fisch-Fördergeschwindigkeit ist und für eine gewünschte Verweilzeit eingestellt bzw. gesteuert wird.

Das vierte Entweidewerkzeug 34 wird vorzugsweise an der Bearbeitungsstelle, an der das erste Entweidewerkzeug 31 aus der Bauchhöhle herausbewegt worden ist, in diese hineinbewegt und dann mit einer Werkzeuggeschwindigkeit in Fisch-Förderrichtung F, die zum Beispiel das Zweifache der Fisch-Fördergeschwindigkeit beträgt, in Richtung zum Anus 95 bewegt und dort mit einer angepassten Hubgeschwindigkeit aus der Bauchhöhle 93 herausbewegt. Insbesondere während dieses Reinigungsvorgangs wirkt die Kontakt-Steuerung mit der Bewegungssteuerung durch das Schwingen-System 4 auf optimale Weise zusammen. Die Werkzeugspitze 300 des Entweidewerkzeugs 34 wird zuverlässig kontinuierlich an der zu bearbeitenden Körperlinie in der Bauchhöhle 93 gehalten. Dies gelingt durch die Feinsteuerung mittels der Messnehmer 161, 162, die durch die Kontaktregelung mittels der Einrichtungs-Steuereinrichtung 15 durchgeführt wird. Gleichermaßen werden vorteilhaft sämtliche Bearbeitungswege der Entweidewerkzeuge 31 bis 33 durch Kontakt mit der zu bearbeitenden Kontur in der Bauchhöhle 93 gesteuert und geregelt. Dabei ist es für ein optimales Ergebnis von Bedeutung, dass sowohl der Schwingen-Schwenkantrieb 7 als auch der Lenk-Schwenkantrieb 8 durch die Kontaktsteuerung zusammenwirkend gesteuert und geregelt werden.

Eine in Fig. 5 vom Zeitpunkt des Beginns der Bearbeitungszeit B bis zum Ende der Rücklaufzeit W dargestellte dicke Balkenlinie repräsentiert schematisch den Summenverlauf der vier Entweidewerkzeuge 31 bis 34. Man erkennt, dass aufgrund der erfindungsgemäßen Bewegungsabläufe und -steuerungen die Bauchhöhle 93 an ihrem Boden sowie an den Schräg- und Wandabschnitten optimal bis in die Ecken ausgekratzt und ausgesaugt wird, wobei die Werkzeugwege an die Bearbeitungskontur optimal angeschmiegt sind, am schwanzseitigen Ende der Bauchhöhle 93 optimal in diese hinein oder aus dieser heraus bewegt werden sowie am kopfseitigen Ende der Bauchhöhle 93 optimal aus der Bauchhöhle frei von Kollision und mit optimaler Rückführung in die Rückzugspositionen bewegt werden. Dies gelingt erfindungsgemäß insoweit ohne Abhängigkeit von der Fisch-Fördergeschwindigkeit, als die Entweidewerkzeuge in Fisch-Förderrichtung F mitlaufen. Im Ganzen erzielt man dadurch eine Reihe zusammenwirkender Vorteile. Die Entweide- und Reinigungsqualität wird erheblich verbessert, die Durchsatzleistung (Fisch-Fördergeschwindigkeit) wird gesteigert und der Betriebsablauf besonders gegen Störung gesichert. Die zuletzt genannte Wirkung wird insbesondere dadurch erreicht, dass die Werkzeugköpfe benachbarter Entweidewerkzeuge 31/32, 32/33 bzw. 33/34 gleichfalls unter Nutzung der Mitlauf-Bewegung eng, das heißt mit kurzem Abstand aneinander gefahren werden, um dem folgenden Entweidewerkzeug durch das noch arbeitende oder aus der Bauchhöhle 93 heraustretende Entweidewerkzeug die Bauchhöhle zum Eintritt offen zu halten, um also zu verhindern, dass sich der durch das Kreismesser 131 geöffnete Bauchschlitz schließt. Flanken der Bauchhöhle 93 werden auseinander gehalten.

Zur Gesamtsteuerung der Entweide-Einrichtung 1 gehört die an sich bekannte Arbeitsweise und Steuerung in Verbindung mit der Fisch-Messeinrichtung 12, die den Fisch an einer signifikanten Stelle erfasst, insbesondere an der Stelle seiner Analflosse 94 und im Übrigen jeden Fisch 9 mit fischspezifischen Daten registriert. Diese Daten werden in üblicher Weise genutzt, um die Zeitpunkte der Einsteuerung der Entweidewerkzeuge 3 zu bestimmen und zu steuern sowie die Bewegungswege der Entweidewerkzeuge vorzubestimmen.

## Patentansprüche

1. Entweide-Einrichtung (1) zum Entweiden von Fischen (9), umfassend einen Förderer (11) zum Fördern der Fische (9) längs einer Bearbeitungslinie (100) in Rückenlage und Längsausrichtung, eine Fisch-Messeinrichtung (12) zum Erfassen spezifischer Fischdaten, eine Bauchöffnungs-Einrichtung (13) und oberhalb der Bearbeitungslinie (100) angeordnete Bearbeitungsmittel zur Entnahme der Eingeweide, bestehend aus hintereinander angeordneten Entweidewerkzeugen (3), die in die geöffnete Bauchhöhle (93) hinein und aus dieser heraus steuerbar sind, wobei jedes Entweidewerkzeug (3) mittels einer zugehörigen, in ihrer Schwenkposition steuerbaren Werkzeug-Schwinge (52) über zwei Schwingen-Schwenkachsen, die beide quer zu einer Vertikalebene und zur Förderrichtung (F) liegen, aufgehängt ist, und eine rechnerbetriebene Einrichtungs-Steuereinrichtung (15), mittels der das Einsteuern, das Aussteuern und Bearbeitungsbahnen der Entweidewerkzeuge (3) in Abhängigkeit von der Fisch-Fördergeschwindigkeit, von den erfassten spezifischen Fischdaten und von Werkzeug-Kontakt mit zu bearbeitenden Fischteilen in der Bauchhöhle (93) steuerbar sind, **dadurch gekennzeichnet, dass** jedes Entweidewerkzeug (3) über ein Schwingen-System (4) aufgehängt ist, das wenigstens zwei gelenkig miteinander verbundene Schwingen (5) aufweist, nämlich an einem Ende des Schwingen-Systems (4) eine Antriebs-Schwinge (51) sowie am anderen Ende des Schwingen-Systems (4) die das Entweidewerkzeug (3) anlenkende Werkzeug-Schwinge (52), wobei das Schwingen-System (4) weiterhin ein gelenkig mit den Schwingen (5) und dem Entweidewerkzeug (3) verbundenes, durch aneinander angelenkte Lenkstangen (61 - 63) gebildetes Lenkgestänge (6) aufweist, durch das Winkelstellungen zwischen den Schwingen (5) sowie zwischen dem Entweidewerkzeug (3) und der Werkzeug-Schwinge (52) stufenlos steuerbar sind, wobei die Antriebs-Schwinge (51) an einem von der Werkzeug-Schwinge (52) fernen Antriebsende mit einem Schwingen-Schwenkantrieb (7) schwenkbar angelenkt ist, der eine in der Entweide-Einrichtung (1) stationär angeordnete Schwingen-Antriebsachse (70) aufweist und zur Steuerung der Schwenkposition der Antriebsschwinge (51) mit der Steuereinrichtung (15) verbunden ist, wobei das Lenkgestänge (6) mit wenigstens einem es steuernden Lenk-Schwenkantrieb (8) steuerbar ist, der zur Steuerung der Winkelstellungen mit der Einrichtungs-Steuereinrichtung (15) verbunden ist, und wobei die Einrichtungs-Steuereinrichtung (15) und das damit gesteuerte Schwingen-System (4) derart eingerichtet sind, dass das Entweidewerkzeug (3) zum Bearbeiten des zu bearbeitenden Fisches (9) mit diesem in Förderrichtung (F) mitlaufend bewegbar ist.

2. Entweide-Einrichtung nach Anspruch 1, **dadurch gekennzeichne**t, dass das Schwingen-System (4) durch zwei Schwingen (5) gebildet ist, nämlich durch die Antriebs-Schwinge (51) und die Werkzeug-Schwinge (52).

3. Entweide-Einrichtung nach Anspruch 2, **dadurch gekennzeichne**t, dass der Schwingen-Schwenkantrieb (7) und ein genannter Lenk-Schwenkantrieb (8) an zusammenfallenden Drehpunkten (D1, D2) mit konzentrischen Antriebsachsen (70, 80) angeordnet sind.

4. Entweide-Einrichtung nach einem der Ansprüche 1 bis 3, **dadurch gekennzeichnet, dass** das Lenkgestänge (6) derart ausgebildet und angelenkt ist, dass das Entweidewerkzeug (3) bei jeder Stellung der Schwingen (5) gleich ausgerichtet ist.

5. Entweide-Einrichtung nach einem der Ansprüche 1 bis 4, **dadurch gekennzeichne**t, dass das Schwingen-System (4) mit den Schwingen (5) und dem Lenkgestänge (6) wenigstens drei Viergelenke bildet.

6. Entweide-Einrichtung nach Anspruch 5, **dadurch gekennzeichnet, dass** das Schwingen-System (4) eingangsseitig ein Antriebs-Viergelenk, ausgangsseitig ein das Entweidewerkzeug (3) anlenkendes Werkzeug-Viergelenk sowie ein Koppel-Viergelenk aufweist, das das Antriebs-Viergelenk mit dem Werkzeug-Viergelenk koppelt.

7. Entweide-Einrichtung nach Anspruch 6, **dadurch gekennzeichnet, dass** Schenkel (641, 642) eines zweischenkligen Koppelhebels ein Hebel des Koppel-Viergelenks und ein Hebel des Werkzeug-Viergelenks sind.

8. Entweide-Einrichtung nach Anspruch 6 oder 7, **dadurch gekennzeichnet, dass** das Antriebs-Viergelenk an zusammenfallenden festen Drehpunkten (D1, D2) aufgehängt ist, die den stationär angeordneten Schwingen-Schwenkantrieb (7) und den Lenk-Schwenkantrieb (8) bilden.

9. Entweide-Einrichtung nach Anspruch 8, **dadurch gekennzeichnet, dass** das Koppel-Viergelenk an dem zu dem Lenk-Schwenkantrieb (8) gehörenden festen Drehpunkt (D2) und an einem weiteren festen Drehpunkt (D3) aufgehängt ist.

10. Entweide-Einrichtung nach einem der Ansprüche 1 bis 9, **dadurch gekennzeichnet, dass** das Lenkgestänge (6) durch ein Parallelogramm-Gestänge gebildet ist, wobei jede Schwinge (5) stets parallel mit wenigstens einer genannten Lenkstange (61 - 63) ausgerichtet ist.

11. Entweide-Einrichtung nach einem der Ansprüche 1 bis 10, **dadurch gekennzeichnet, dass** das Schwingen-System (4) und die Steuerung mittels der Steuereinrichtung (15) derart eingerichtet sind, dass wenigstens ein genanntes Entweidewerkzeug (3) zum Mitlaufen mit dem zu bearbeitenden Fisch (9) in Förderrichtung (F) mit einer Geschwindigkeit bewegbar ist, die größer als die Fördergeschwindigkeit oder gleich der Fördergeschwindigkeit des zu bearbeitenden Fisches (9) ist.

12. Entweide-Einrichtung nach einem der Ansprüche 1 bis 11, **dadurch gekennzeichnet, dass** das Schwingen-System (4) und die Steuerung mittels der Steuereinrichtung (15) derart eingerichtet sind, dass wenigstens ein genanntes Entweidewerkzeug (3) zum Mitlaufen mit dem zu bearbeitenden Fisch (9) in Förderrichtung (F) mit einer Geschwindigkeit bewegbar ist, die kleiner als die Fördergeschwindigkeit des zu bearbeitenden Fisches (9) ist.

13. Entweide-Einrichtung nach einem der Ansprüche 1 bis 12, **dadurch gekennzeichnet, dass** die Einrichtungs-Steuereinrichtung (15) mit einer Kontakt-Steuerung eingerichtet ist, die kontinuierlich den Bearbeitungs-Kontakt des Entweidewerkzeugs (3) mit einem zu bearbeitenden Fischteil feststellt und auf Basis der Kontaktfeststellung entlang eines Bearbeitungsweges kontinuierlich aufrechterhält.

14. Entweide-Einrichtung nach Anspruch 13, **dadurch gekennzeichnet, dass** die Einrichtungs-Steuereinrichtung (15) mit wenigstens einem Kontakt-Messelement (161,162) verbunden ist, das zum Steuern wenigstens eines der beiden Steuerantriebe, das heißt des Steuerantriebs (7) der AntriebsSchwinge (51) und des Steuerantriebs (8) des Lenkgestänges (6), ein Antriebsmoment des zugehörigen Steuerantriebs (7, 8) misst.

15. Entweide-Einrichtung nach Anspruch 14, **dadurch gekennzeichnet, dass** die Einrichtungs-Steuereinrichtung (15) derart eingerichtet ist, dass der Bearbeitungskontakt wenigstens eines der genannten Entweidewerkzeuge (3), das in Fisch-Förderrichtung (F) mit einer entsprechenden Geschwindigkeitsdifferenz zwischen dem Entweidewerkzeug (34) und dem zu bearbeitenden Fisch (9) gegen einen sich erhöhenden Bearbeitungsabschnitt arbeitet, aufrechterhalten bleibt.

16. Verfahren zum Entweiden von Fischen (9), die entlang einer Bearbeitungslinie (100) in Rückenlage und Längsausrichtung gefördert werden, wobei mittels einer Fisch-Messeinrichtung (12) spezifische Fischdaten erfasst werden, zunächst der Bauch geöffnet wird und anschließend mit mehreren längs der Bearbeitungslinie (100) hintereinander angeordneten Entweidewerkzeugen (3) die Bauchhöhle (93) ausgeräumt und gereinigt wird, wobei Bewegungen der Entweidewerkzeuge (3) in Abhängigkeit von Steuergrößen, nämlich von den gemessenen Fischdaten, von Bearbeitungskontakt mit Fischteilen in der Bauchhöhle (93) und von der Fisch-Fördergeschwindigkeit gesteuert werden, **dadu rch gekennzeichnet**, dass sämtliche Entweidewerkzeuge (3) während ihrer Positionen in der Bauchhöhle (93) in Abhängigkeit von der Bearbeitungsposition und der Bearbeitungsoperation in Fisch-Förderrichtung (F) mit dem zu bearbeitenden Fisch (9) mitlaufend bewegt werden, wobei die Mitlauf-Bewegungen mit Werkzeuggeschwindigkeiten durchgeführt werden, die kleiner, gleich oder größer als die Fisch-Fördergeschwindigkeit sind.

17. Verfahren nach Anspruch 16, **dadurch gekennzeichnet, dass** jedes Entweidewerkzeug (3) zum Durchführen einer zugehörigen Bearbeitungsoperation in der Bauchhöhle (93) durch Rotationsbewegungen mit wenigstens drei Freiheitsgraden in einer Ebene, die durch die Bearbeitungslinie (100) und eine vertikale Bewegungskomponente des Entweidewerkzeugs (3) aufgespannt wird, bewegt wird, wobei jeweils eine Arbeitsbewegung des Entweidewerkzeugs (3), nämlich eine in die Bauchhöhle (93) hineinführenden Einsteuerbewegung, eine aus der Bauchhöhle herausführende Aussteuerbewegung sowie eine Werkzeug-Mitlaufbewegung, mit der das Entweidewerkzeug (3) mit dem zu bearbeitenden Fisch (9) während des Eingriffs in die Bauchhöhle mitläuft, durch ein Zusammenwirken der Rotationsbewegungen resultiert, die mittels eines stationär angeordneten und schwenkbar aufgehängten Schwingen-Systems (4) mit wenigstens zwei aneinander angelenkten und gemäß der genannten Steuergrößen gesteuerten und gelenkten Schwingen (5) erzeugt werden.

18. Verfahren nach Anspruch 16 oder 17, **dadurch gekennzeichnet, dass** das Verfahren mittels einer Entweide-Einrichtung (1) nach einem der Ansprüche 1 bis 15 durchgeführt wird.

19. Verfahren nach einem der Ansprüche 16 bis 18, **dadurch gekennzeichnet, dass** wenigstens ein Entweidewerkzeug (3) während wenigstens einer im Verhältnis zur Bearbeitungszeit des Entweidewerkzeugs (3) kurzen Phase in der Bauchhöhle (93) in nicht mit dem Fisch (9) mitlaufender Position bewegt wird.

20. Verfahren nach einem der Ansprüche 16 bis 19, **dadurch gekennzeichnet, dass** eine mittlere Werkzeuggeschwindigkeit in Fisch-Förderrichtung (F) größer als ein Drittel einer mittleren Fisch-Fördergeschwindigkeit ist.

21. Verfahren nach einem der Ansprüche 16 bis 20, **dadurch gekennzeichnet, dass** die Fische (9) Schwanz voraus gefördert werden und wenigstens ein genanntes Entweidewerkzeug (3) zum Herausführen aus der Bauchhöhle (93) am kopfseitigen Ende der Bauchhöhle (93) mit größerer Geschwindigkeit als der Fisch-Fördergeschwindigkeit bei gleichzeitigem Hebehub bewegt wird.

22. Verfahren nach einem der Ansprüche 16 bis 21, **dadurch gekennzeichnet, dass** wenigstens ein genanntes Entweidewerkzeug (3), nämlich ein Nachreinigungs-Schabewerkzeug (34) zum Nachreinigen mit größerer Geschwindigkeit als der Fisch-Fördergeschwindigkeit gegen einen sich erhöhenden Bodenbereich der Bauchhöhle (93) bis zum Anus (95) geführt und dort aus der Bauchhöhle (93) herausbewegt wird.

23. Verfahren nach Anspruch 22, **dadurch gekennzeichnet, dass** das Nachreinigungs-Schabewerkzeug (34) mittels einer Kontakt-Steuerung betrieben wird, die den Kontakt des Nachreinigungs-Schabewerkzeugs (34) mit dem sich erhöhenden Bodenbereich kontinuierlich aufrechterhält.

24. Verfahren nach einem der Ansprüche 16 bis 23, **dadurch gekennzeichnet, dass** wenigstens ein in Förderrichtung (F) mit dem Fisch (9) mitlaufendes genanntes Entweidewerkzeug (3) vertikal in die Bauchhöhle (93) eingeführt wird.

25. Verfahren nach einem der Ansprüche 16 bis 24, **dadurch gekennzeichnet, dass** jeweils zwei benachbarte Entweidewerkzeuge (31/32; 32/33; 33/34) in Positionen eines kleinen Abstandes ihrer Werkzeugköpfe im Bereich der Bauchhöhle (93) derart bewegt werden, dass die Bauchhöhle (93) wenigstens zum Einführen und beim Wirkungsbeginn des stromabwärts gelegenen Entweidewerkzeugs (32; 33; 34) der beiden benachbarten Entweidewerkzeuge mittels des stromaufwärts gelegenen Entweidewerkzeugs (31; 32; 33) offengehalten wird.

26. Verfahren nach einem der Ansprüche 16 bis 25, **dadurch gekennzeichnet, dass** die Fische (9) Schwanz voraus gefördert werden und die Bearbeitungswege (31', 33') des ersten und dritten Entweidewerkzeugs (31, 33) von drei entlang der Bearbeitungslinie (100) hintereinander angeordneten genannten Entweidewerkzeugen (31, 32, 33) im ersten schwanzseitigen Drittel der Bauchhöhle (93) beginnen und bis zum kopfseitigen Ende der Bauchhöhle (93) geführt werden.

27. Verfahren nach Anspruch 26, **dadurch gekennzeichnet, dass** die Bearbeitungswege (31', 33') des ersten und dritten Entweidewerkzeugs (31, 33) übereinstimmend verlaufen.

28. Verfahren nach Anspruch 26 oder 27, **dadurch gekennzeichnet, dass** der Bearbeitungsweg (34') eines dem dritten Entweidewerkzeug (33) nachgeordneten vierten Entweidewerkzeugs (34) in der Mitte der Bauchhöhle (93) beginnt und am Anus (95) endet.

29. Verfahren nach einem der Ansprüche 26 bis 28, **dadurch gekennzeichnet, dass** der Bearbeitungsweg (32') des zweiten Entweidewerkzeugs (32) am Anus (95) beginnt und in der Mitte der Bauchhöhle (93) endet.

30. Verfahren nach Anspruch 28 oder 29, **dadurch gekennzeichnet, dass** die Bearbeitungswege (32', 34') des zweiten Entweidewerkzeugs (32) und des vierten Entweidewerkzeugs (34) mit entgegengesetztem Richtungsverlauf übereinstimmen.

## Claims

1. Gutting device (1) for gutting fish (9), comprising a conveyor (11) for conveying the fish (9) along a processing line (100) in a supine position and a longitudinal orientation, a fish measuring device (12) for detecting specific fish data, an abdominal opening device (13) and processing means arranged above the processing line (100) for removing the internal organs, consisting of gutting tools (3) arranged one behind the other which can be controlled into and out of the opened abdominal cavity (93), wherein each gutting tool (3) is suspended by means of an associated tool rocker (52) controllable in its pivot position via two rocker pivot axes which both lie transverse to a vertical plane and to the conveying direction (F), and a computer-operated device controller (15) by means of which the controlled insertion, controlled retraction and processing paths of the gutting tools (3) are controllable, dependent on the fish conveying speed, the detected specific fish data and tool contact with fish parts to be processed in the abdominal cavity (93), **characterised in that** each gutting tool (3) is suspended by means of a rocker system (4), having at least two crank rockers (5) connected to each other in an articulated manner, namely a drive rocker (51) at one end of the rocker system (4) and at the other end of the rocker system (4) the tool rocker (52) hinging on the gutting tool (3), wherein the rocker system (4) further comprises a steering linkage (6), hingedly connected to the crank rockers (5) and the gutting tool (3), formed by mutually articulated steering rods (61 - 63), by means of which angular positions between the crank rockers (5) and between the gutting tool (3) and the tool rocker (52) can be continuously controlled, wherein the drive rocker (51) is pivotably hinged with a rocker pivot drive (7) on a drive end distant from the tool rocker (52), said rocker pivot drive having a rocker drive axis (70) arranged stationarily in the gutting device (1) and being connected to the controller (15) for controlling the pivot position of the drive rocker (51), wherein the steering linkage (6) is controllable by means of at least one steering pivot drive (8) that controls the steering linkage, said steering pivot drive being connected to the device controller (15) for controlling the angular positions, and wherein the device controller (15) and the rocker system (4) controlled thereby are configured in such a manner that the gutting tool (3) for processing the fish to be processed (9) can be moved in a co-running manner therewith in a conveying direction (F).

2. Gutting device according to claim 1, **characterised in that** the rocker system (4) is formed by two crank rockers (5), namely by the drive rocker (51) and the tool rocker (52).

3. Gutting device according to claim 2, **characterised in that** the rocker pivot drive (7) and a said steering pivot drive (8) are arranged at coinciding pivot points (D1, D2) with concentric drive axes (70, 80).

4. Gutting device according to any one of claims 1 to 3, **characterised in that** the steering linkage (6) is designed and hinged in such a manner that the gutting tool (3) is aligned in the same way in any position of the crank rockers (5).

5. Gutting device according to any one of claims 1 to 4, **characterised in that** the rocker system (4) forms at least three four-bar linkages with the crank rockers (5) and the steering linkage (6).

6. Gutting device according to claim 5, **characterised in that** the rocker system (4) comprises a drive four-bar linkage on the input side, a tool four-bar linkage hinging to the gutting tool (3) on the output side and a coupling four-bar linkage which couples the drive four-bar linkage to the tool four-bar linkage.

7. Gutting device according to claim 6, **characterised in that** the arms (641, 642) of a two-arm coupling lever are a lever of the coupling four-bar linkage and a lever of the tool four-bar linkage.

8. Gutting device according to claim 6 or 7, **characterised in that** the drive four-bar linkage is suspended at coinciding fixed pivot points (D1, D2) which form the stationarily arranged rocker pivot drive (7) and the steering pivot drive (8).

9. Gutting device according to claim 8, **characterised in that** the coupling four-bar linkage is suspended at the fixed pivot point (D2) associated with the steering pivot drive (8) and a further fixed pivot point (D3).

10. Gutting device according to any one of claims 1 to 9, **characterised in that** the steering linkage (6) is formed by a parallelogram linkage, wherein each crank rocker (5) is always aligned in parallel with at least one of said steering rods (61 - 63).

11. Gutting device according to any one of claims 1 to 10, **characterised in that** the rocker system (4) and the control are configured by means of the controller (15) in such a manner that at least one of said gutting tools (3) is movable for running together with the fish to be processed (9) in a conveying direction (F) at a speed which is greater than the conveying speed or equal to the conveying speed of the fish to be processed (9).

12. Gutting device according to any one of claims 1 to 11, **characterised in that** the rocker system (4) and the control are configured by means of the controller (15) in such a manner that at least one of said gutting tools (3) is movable for running together with the fish to be processed (9) in a conveying direction (F) at a speed which is less than the conveying speed of the fish to be processed (9).

13. Gutting device according to any one of claims 1 to 12, **characterised in that** the device controller (15) is configured with a contact control which continuously detects the processing contact of the gutting tool (3) with a fish part to be processed and continuously maintains said processing contact along a processing path based on the detection of said contact.

14. Gutting device according to claim 13, **characterised in that** the device controller (15) is connected to at least one contact measuring element (161, 162) which for controlling at least one of the two control drives, that is the control drive (7) of the drive rocker (51) and the control drive (8) of the steering linkage (6), measures a driving torque of the associated control drive (7, 8).

15. Gutting device according to claim 14, **characterised in that** the device controller (15) is configured in such a manner that the processing contact of at least one of said gutting tools (3), which works with a corresponding speed difference between the gutting tool (34) and the fish to be processed (9) in the fish conveying direction (F) towards an ascending processing section, is maintained.

16. Method for gutting fish (9) which are conveyed along a processing line (100) in a supine position and a longitudinal orientation, wherein specific fish data are detected by means of a fish measuring device (12), first the abdomen being opened and then the abdominal cavity (93) being cleared and cleaned with a plurality of gutting tools (3) arranged one behind the other along the processing line (100), wherein movements of the gutting tools (3) are controlled dependent on control variables, namely on the measured fish data, on processing contact with fish parts in the abdominal cavity (93) and on the fish conveying speed, **characterised in that** all the gutting tools (3) during their positions in the abdominal cavity (93) are moved in a co-running manner with the fish to be processed (9) in the fish conveying direction (F) dependent on the processing position and the processing operation, wherein the co-running movements are carried out at tool speeds which are less than, equal to or greater than the fish conveying speed.

17. Method according to claim 16, **characterised in that** each gutting tool (3) for carrying out an associated processing operation in the abdominal cavity (93) is moved by means of rotational movements, with at least three degrees of freedom, in a plane which is defined by the processing line (100) and a vertical movement component of the gutting tool (3), wherein a working movement of the gutting tool (3), each, namely an insertion control movement leading into the abdominal cavity (93), a retraction control movement leading out of the abdominal cavity and a co-running tool movement, with which the gutting tool (3) moves along with the fish to be processed (9) during the intervention in the abdominal cavity, results due to a cooperation of the rotational movements which are produced by means of a stationarily arranged and pivotably suspended rocker system (4) having at least two mutually articulated rockers (5) controlled and steered according to said control variables.

18. Method according to claim 16 or 17, **characterised in that** the method is carried out by means of a gutting device (1) according to any one of claims 1 to 15.

19. Method according to any one of claims 16 to 18, **characterised in that** at least one gutting tool (3) is moved during a short phase, compared to the processing time of the gutting tool (3) in the abdominal cavity (93), in a position not co-running with the fish (9).

20. Method according to any one of claims 16 to 19, **characterised in that** an average tool speed in the fish conveying direction (F) is greater than a third of an average fish conveying speed.

21. Method according to any one of claims 16 to 20, **characterised in that** the fish (9) are conveyed tail-first and at least one of said gutting tools (3) is moved at a greater speed than the fish conveying speed with a simultaneous lifting stroke for guiding out of the abdominal cavity (93) at the head end of said abdominal cavity (93).

22. Method according to any one of claims 16 to 21, **characterised in that** at least one of said gutting tools (3), namely a post-cleaning scraping tool (34) for post-cleaning, is guided at greater speed than the fish conveying speed towards an ascending base region of the abdominal cavity (93) up to the anus (95) and is there moved out of the abdominal cavity (93).

23. Method according to claim 22, **characterised in that** the post-cleaning scraping tool (34) is operated by means of a contact control which continuously maintains the contact of the post-cleaning scraping tool (34) with the ascending base region.

24. Method according to any one of claims 16 to 23, **characterised in that** at least one of said gutting tools (3) co-running together with the fish (9) in the conveying direction (F) is inserted vertically into the abdominal cavity (93).

25. Method according to any one of claims 16 to 24, **characterised in that** two adjacent gutting tools (31/32; 32/33; 33/34), each, are moved in positions within a small distance of their tool heads in the region of the abdominal cavity (93) in such a manner that the abdominal cavity (93) is held open by means of the upstream gutting tool (31; 32; 33) at least for insertion and at the commencement of operation of the downstream gutting tool (32; 33; 34) of the two adjacent gutting tools.

26. Method according to any one of claims 16 to 25, **characterised in that** the fish (9) are conveyed tail-first and the processing paths (31', 33') of the first and third gutting tool (31, 33) of three said gutting tools (31, 32, 33), arranged one behind the other along the processing line (100), start in the first tail-side third of the abdominal cavity (93) and are guided up to the head-side end of the abdominal cavity (93).

27. Method according to claim 26, **characterised in that** the processing paths (31', 33') of the first and third gutting tool (31, 33) are coincident.

28. Method according to claim 26 or 27, **characterised in that** the processing path (34') of a fourth gutting tool (34) downstream of the third gutting tool (33) starts in the middle of the abdominal cavity (93) and ends at the anus (95).

29. Method according to one of claims 26 to 28, **characterised in that** the processing path (32') of the second gutting tool (32) starts at the anus (95) and ends in the middle of the abdominal cavity (93).

30. Method according to claim 28 or 29, **characterised in that** the processing paths (32', 34') of the second gutting tool (32) and of the fourth gutting tool (34) coincide with the opposite directional path.

## Revendications

1. Dispositif d'éviscération (1) destiné à évider des poissons (9), comprenant un convoyeur (11) destiné à convoyer le long d'une ligne de traitement (100) les poissons (9) allongés sur le dos et dans le sens de la longueur, un dispositif de mesure de poisson (12) destiné à recueillir des données spécifiques sur les poissons, un dispositif pour entailler l'abdomen (13) et des moyens de traitement disposés au-dessus de la ligne de traitement (100) pour retirer les viscères, composés d'outils d'éviscération (3) agencés les uns derrière les autres, qui sont susceptibles d'être commandés pour entrer dans la cavité abdominale (93) entaillée ou pour en ressortir, chaque outil d'éviscération (3) étant suspendu au moyen d'un bras oscillant d'outil (52) correspondant, susceptible d'être commandé dans sa position de pivotement, au-dessus de deux axes de pivotement d'oscillation qui sont tous les deux à la transversale d'un plan vertical et du sens de convoyage (F), et un dispositif de commande du dispositif (15) par ordinateur, au moyen duquel la commande d'entrée, la commande de sortie et les trajectoires de traitement des outils d'éviscération (3) sont susceptibles d'être commandés dans la cavité abdominale (93) en fonction de la vitesse de convoyage des poissons, des données spécifiques recueillies sur les poissons et du contact des outils avec les parties de poisson à traiter, **caractérisé en ce que** chaque outil d'éviscération (3) est suspendu par le biais d'un système oscillant (4) qui présente au moins deux bras oscillants (5) reliés l'un à l'autre de manière articulée, c'est-à-dire un bras oscillant d'entraînement (51) à une extrémité du système oscillant (4) ainsi que, à l'autre extrémité du système oscillant (4), le bras oscillant d'outil (52) fixant par articulation l'outil d'éviscération (3), le système oscillant (4) présentant de plus un train de barres de direction (6) relié de manière articulée aux bras oscillants (5) et à l'outil d'éviscération (3), formé par des barres de direction (61 - 63) fixées les unes aux autres par articulation, par lequel des positions angulaires sont susceptibles d'être commandées en continu entre les bras oscillants (5) ainsi qu'entre l'outil d'éviscération (3) et le bras oscillant d'outil (52), le bras oscillant d'entraînement (51) étant fixé par articulation de manière pivotante à un actionneur de pivotement d'oscillation (7) à une extrémité d'entraînement distante du bras oscillant d'outil (52), lequel actionneur présente un axe d'entraînement d'oscillation (70) agencé de manière fixe dans le dispositif d'éviscération (1) et est relié au dispositif de commande (15) pour commander la position de pivotement du bras oscillant d'entraînement (51), le train de barres de direction (6) étant susceptible d'être commandé par au moins un actionneur de pivotement de direction (8) le commandant qui est connecté au dispositif de commande du dispositif (15) pour commander les positions angulaires, et le dispositif de commande du dispositif (15) et le système oscillant (4) commandé par ce biais étant conçus de telle sorte que l'outil d'éviscération (3), pour traiter le poisson (9) à traiter, est susceptible d'être déplacé simultanément à celui-ci dans le sens de convoyage (F).

2. Dispositif d'éviscération selon la revendication 1, **caractérisé en ce que** le système oscillant (4) est formé par deux bras oscillants (5), c'est-à-dire par le bras oscillant d'entraînement (51) et le bras oscillant d'outil (52).

3. Dispositif d'éviscération selon la revendication 2, **caractérisé en ce que** l'actionneur de pivotement d'oscillation (7) et un actionneur de pivotement de direction (8) nommé sont agencés avec des axes d'entraînement concentriques (70, 80) à des points de rotation (D1, D2) coïncidents.

4. Dispositif d'éviscération selon l'une quelconque des revendications 1 à 3, **caractérisé en ce que** le train de barres de direction (6) est conçu et fixé par articulation de telle sorte que l'outil d'éviscération (3) est orienté dans la même direction quelle que soit la position des bras oscillants (5).

5. Dispositif d'éviscération selon l'une quelconque des revendications 1 à 4, **caractérisé en ce que** le système oscillant (4) forme, avec les bras oscillants (5) et le train de barres de direction (6), au moins trois quadrilatères articulés.

6. Dispositif d'éviscération selon la revendication 5, **caractérisé en ce que** le système oscillant (4) présente un quadrilatère articulé d'entraînement du côté de l'entrée, du côté de la sortie, un quadrilatère articulé d'outil fixant par articulation l'outil d'éviscération (3), ainsi qu'un quadrilatère articulé de liaison qui établit la liaison entre le quadrilatère articulé d'entraînement et le quadrilatère articulé d'outil.

7. Dispositif d'éviscération selon la revendication 6, **caractérisé en ce que** des ailes (641, 642) d'un levier de liaison à deux ailes sont un levier du quadrilatère articulé de liaison et un levier du quadrilatère articulé d'outil.

8. Dispositif d'éviscération selon la revendication 6 ou 7, **caractérisé en ce que** le quadrilatère articulé d'entraînement est suspendu à des points de rotation (D1, D2) coïncidents fixes qui forment l'actionneur de pivotement d'oscillation (7) agencé de manière fixe et l'actionneur de pivotement de direction (8).

9. Dispositif d'éviscération selon la revendication 8, **caractérisé en ce que** le quadrilatère articulé de liaison est suspendu au point de rotation (D2) fixe appartenant à l'actionneur de pivotement de direction (8) et à un autre point de rotation (D3) fixe.

10. Dispositif d'éviscération selon l'une quelconque des revendications 1 à 9, **caractérisé en ce que** le train de barres de direction (6) est formé par un train de barres en forme de parallélogramme, chaque bras oscillant (5) étant constamment orienté à la parallèle d'au moins une desdites barres de direction (61 - 63).

11. Dispositif d'éviscération selon l'une quelconque des revendications 1 à 10, **caractérisé en ce que** le système oscillant (4) et la commande au moyen du dispositif de commande (15) sont conçus de telle sorte qu'au moins un outil d'éviscération (3) nommé est susceptible d'être déplacé simultanément avec le poisson (9) à traiter dans le sens de convoyage (F) à une vitesse supérieure à la vitesse de convoyage ou égale à la vitesse de convoyage du poisson (9) à traiter.

12. Dispositif d'éviscération selon l'une quelconque des revendications 1 à 11, **caractérisé en ce que** le système oscillant (4) et la commande au moyen du dispositif de commande (15) sont conçus de telle sorte qu'au moins un outil d'éviscération (3) nommé est susceptible d'être déplacé simultanément avec le poisson (9) à traiter dans le sens de convoyage (F) à une vitesse inférieure à la vitesse de convoyage du poisson (9) à traiter.

13. Dispositif d'éviscération selon l'une quelconque des revendications 1 à 12, **caractérisé en ce que** le dispositif de commande du dispositif (15) est conçu avec une commande de contact qui détermine en continu le contact de traitement de l'outil d'éviscération (3) avec une partie du poisson à traiter et le maintient en continu le long d'une voie de traitement sur la base du contact déterminé.

14. Dispositif d'éviscération selon la revendication 13, **caractérisé en ce que** le dispositif de commande du dispositif (15) est relié à au moins un élément de mesure du contact (161, 162) qui, pour commander au moins un des deux mécanismes de commande, c'est-à-dire le mécanisme de commande (7) du bras oscillant d'entraînement (51) et le mécanisme de commande (8) du train de barres de direction (6), mesure un couple d'entraînement du mécanisme de commande (7, 8) correspondant.

15. Dispositif d'éviscération selon la revendication 14, **caractérisé en ce que** le dispositif de commande du dispositif (15) est conçu de telle sorte que le contact de traitement d'au moins un desdits outils d'éviscération (3) est maintenu, lequel outil d'éviscération, dans le sens de convoyage du poisson (F) à une différence de vitesse correspondante entre l'outil d'éviscération (34) et le poisson (9) à traiter, travaille contre une portion de traitement s'élevant en hauteur.

16. Procédé d'éviscération de poissons (9) convoyés le long d'une ligne de traitement (100) allongés sur le dos et dans le sens de la longueur, un dispositif de mesure de poisson (12) permettant de recueillir des données spécifiques sur les poissons, l'abdomen étant tranché dans un premier temps, puis plusieurs outils d'éviscération (3) agencés les uns derrière les autres le long de la ligne de traitement (100) évidant et nettoyant la cavité abdominale (93), des mouvements des outils d'éviscération (3) étant commandés en fonction de valeurs de commande, c'est-à-dire des données de mesure des poissons, du contact de traitement avec les parties de poisson dans la cavité abdominale (93) et de la vitesse de convoyage du poisson, **caractérisé en ce que** tous les outils d'éviscération (3) sont, au cours de leurs positions dans la cavité abdominale (93), déplacés simultanément avec le poisson (9) à traiter dans le sens de convoyage du poisson (F) en fonction de la position de traitement et de l'opération de traitement, les déplacements en simultanéité étant exécutés à des vitesses d'outil qui sont inférieures, égales ou supérieures à la vitesse de convoyage du poisson.

17. Procédé selon la revendication 16, **caractérisé en ce que** chaque outil d'éviscération (3) est déplacé pour exécuter une opération de traitement correspondante dans la cavité abdominale (93) par mouvements de rotation avec au moins trois degrés de liberté dans un plan défini par la ligne de traitement (100) et une composante de mouvement verticale de l'outil d'éviscération (3), un mouvement de travail de l'outil d'éviscération (3), c'est-à-dire un mouvement de commande entrant d'introduction dans la cavité abdominale (93), un mouvement de commande sortant de sortie de la cavité abdominale ainsi qu'un mouvement de déplacement d'outil en simultanéité par lequel l'outil d'éviscération (3) se déplace simultanément avec le poisson (9) à traiter au cours de l'intervention dans la cavité abdominale, résultant respectivement d'une coopération entre les mouvements de rotation générés au moyen d'un système oscillant (4) agencé fixe et suspendu en oscillation, doté d'au moins deux bras oscillants (5) fixés l'un à l'autre par articulation et commandés et dirigés en fonction desdites valeurs de commande.

18. Procédé selon la revendication 16 ou 17, **caractérisé en ce que** le procédé est mis en oeuvre à l'aide d'un dispositif d'éviscération (1) selon l'une quelconque des revendications 1 à 15.

19. Procédé selon l'une quelconque des revendications 16 à 18, **caractérisé en ce qu'**au moins un outil d'éviscération (3) est déplacé pendant au moins une courte phase, par rapport à la durée de traitement de l'outil d'éviscération (3), dans la cavité abdominale (93) dans une position qui n'est pas en simultanéité avec le poisson (9).

20. Procédé selon l'une quelconque des revendications 16 à 19, **caractérisé en ce qu'**une vitesse moyenne de l'outil dans le sens de convoyage du poisson (F) est supérieure à un tiers d'une vitesse moyenne de convoyage du poisson.

21. Procédé selon l'une quelconque des revendications 16 à 20, **caractérisé en ce que** les poissons (9) sont convoyés avec la queue en avant et qu'au moins un outil d'éviscération (3) nommé est déplacé pour sortir de la cavité abdominale (93) à l'extrémité de la cavité abdominale (93) se trouvant du côté de la tête, à une vitesse supérieure à la vitesse de convoyage du poisson tout en étant relevé simultanément.

22. Procédé selon l'une quelconque des revendications 16 à 21, **caractérisé en ce qu'**au moins un outil d'éviscération (3) nommé, c'est-à-dire un outil racleur de nettoyage ultérieur (34) destiné au nettoyage ultérieur à une vitesse plus élevée que la vitesse de convoyage du poisson, est conduit jusqu'à l'anus (95) contre un fond de la cavité abdominale (93) s'élevant vers le haut, pour être sorti de la cavité abdominale (93) à cet endroit.

23. Procédé selon la revendication 22, **caractérisé en ce que** l'outil racleur de nettoyage ultérieur (34) est actionné au moyen d'une commande de contact qui maintient en continu le contact entre l'outil racleur de nettoyage ultérieur (34) et le fond s'élevant vers le haut.

24. Procédé selon l'une quelconque des revendications 16 à 23, **caractérisé en ce qu'**au moins un outil d'éviscération (3) nommé de déplacement simultané avec le poisson (9) dans le sens de convoyage (F) est introduit verticalement dans la cavité abdominale (93).

25. Procédé selon l'une quelconque des revendications 16 à 24, **caractérisé en ce que** des outils d'éviscération voisins (31/32 ; 32/33 ; 33/34) sont déplacés par deux dans des positions où leurs têtes d'outil sont à peu de distance l'une de l'autre dans la zone de la cavité abdominale (93) de telle sorte que la cavité abdominale (93) est maintenue ouverte par l'outil d'éviscération (31 ; 32 ; 33) situé en amont, au moins pour introduire l'outil d'éviscération (32 ; 33 ; 34) situé en aval, et au début de l'action de celui-ci.

26. Procédé selon l'une quelconque des revendications 16 à 25, **caractérisé en ce que** les poissons (9) sont convoyés avec la queue en avant et que les voies de traitement (31', 33') du premier et du troisième outil d'éviscération (31, 33) commencent dans le premier tiers de la cavité abdominale (93) du côté de la queue, à partir de trois outils d'éviscération (31, 32, 33) nommés agencés les uns derrière les autres le long de la ligne de traitement (100), et s'étendent jusqu'à l'extrémité de la cavité abdominale (93) située du côté de la tête.

27. Procédé selon la revendication 26, **caractérisé en ce que** les voies de traitement (31', 33') du premier et du troisième outil d'éviscération (31, 33) sont coïncidentes.

28. Procédé selon la revendication 26 ou 27, **caractérisé en ce que** la voie de traitement (34') d'un quatrième outil d'éviscération (34) placé après le troisième outil d'éviscération (33) commence au milieu de la cavité abdominale (93) et se termine à l'anus (95).

29. Procédé selon l'une quelconque des revendications 26 à 28, **caractérisé en ce que** la voie de traitement (32') du deuxième outil d'éviscération (32) commence à l'anus (95) et se termine au milieu de la cavité abdominale (93).

30. Procédé selon la revendication 28 ou 29, **caractérisé en ce que** les voies de traitement (32', 34') du deuxième outil d'éviscération (32) et du quatrième outil d'éviscération (34) coïncident avec un sens de parcours opposé.
